# EUROPEAN PATENT SPECIFICATION

(11) **EP 4 684 509 B1**
(45) Date of publication and mention of the grant of the patent: **08.07.2026**
(21) Application number: 24726668.7
(22) Date of filing: 23.05.2024
(51) Int. Cl.: H04L 9/40, H04L 9/00, H04L 61/4511, H04L 9/32

(54) **METHOD AND SYSTEM FOR OPERATING A DOMAIN NAME SYSTEM USING A BLOCKCHAIN**
VERFAHREN UND SYSTEM ZUM BETREIBEN EINES DOMÄNENNAMENSYSTEMS UNTER VERWENDUNG EINER BLOCKCHAIN
PROCÉDÉ ET SYSTÈME POUR FAIRE FONCTIONNER UN SYSTÈME DE NOM DE DOMAINE À L'AIDE D'UNE CHAÎNE DE BLOCS

(30) Priority: 23.05.2023 EP 23174836
(43) Date of publication of application: 28.01.2026
(73) Proprietor: AVODAQ AG, 80687 München (DE)
(72) Inventor: PLATZER, Matthias, 81247 München (DE); KUSCH, Patrick, 22043 Hamburg (DE); BONK, Sebastian, 10711 Berlin (DE)
(74) Representative: Patentanwaltskanzlei WILHELM & BECK
(86) International application number: PCT/EP2024/064263
(87) International publication number: WO 2024/240887

(56) References cited:
- US-B1- 11 477 005
- US-B1- 11 558 344
- RANDALL AUDREY ET AL: "The Challenges of Blockchain-Based Naming Systems for Malware Defenders", 2022 APWG SYMPOSIUM ON ELECTRONIC CRIME RESEARCH (ECRIME), IEEE, 30 November 2022 (2022-11-30), pages 1 - 14, XP034356616, DOI: 10.1109/ECRIME57793.2022.10142131

## Description

The invention refers to a method for operating a domain name system and a system for operating a domain name system using a blockchain.

US 11,558,344 B1 describes a method and a system for operating a domain name system, wherein an identifier of a non-fungible token is sent to a blockchain to search for a non-fungible token to identify an IP address for a domain name.

US 11,477,005 B1 discloses systems and/or methods to enable crypto-ledger interoperability using a controller to perform an operation between a first user and a second user on separate entity-specific distributed crypto-ledgers, where the separate entity-specific distributed crypto-ledgers are both operatively linked to a membered common distributed crypto-ledger. In the crypto-ledgers, non-fungible tokens are stored. Additionally, domain names are used to address storages of the crypto-ledgers.

The object of the proposed method and system is to provide a simpler and more flexible method to use a blockchain for a domain name system.

The object is solved by the independent claims. The dependent claims describe further embodiments of the invention.

A computer-implemented method for operating a domain name system by using a blockchain is proposed, wherein the blockchain comprises a smart contract, wherein the smart contract handles at least one domain name non-fungible-token (DN NFT), wherein the DN NFT comprises a domain name and an IP address that is assigned to the domain name, wherein the smart contract searches after receiving a request to resolve an IP address for a given domain name the DN NFT that comprises the domain name and the IP address that is assigned to the domain name, wherein the smart contract outputs the IP address that is assigned to the domain name in the DN NFT.

The use of the domain name for searching the DN NFT simplifies the search. It is not necessary to search outside the blockchain an identifier for a DN NFT for example. Therefore, the search from a user can be directly sent to the blockchain to search for the domain name the corresponding IP address. This method can be directly integrated in existing systems since the search process is not changed. The request can be sent directly to the blockchain.

In a further embodiment a domain list that assigns domain names to DN NFTs is stored in the blockchain, wherein each DN NFT comprises a domain name and the corresponding IP address, wherein the smart contract is embodied to access the list, to search a searched domain name in the list, to access the DN NFT that is assigned to the searched domain name of the list, to output the IP address that is stored in the DN NFT as IP address of the searched domain name. The use of the list is an advantageous solution to find for a domain name the corresponding DN NFT. The DN NFT can be displayed with its blockchain address in the domain list.

In a further embodiment the smart contract is embodied to receive a request to mint a DN NFT for a domain name and an IP address, wherein the smart contract is embodied to mint a DN NFT in the blockchain that comprises the domain name and the IP address.

In a further embodiment the smart contract lists the minted DN NFT in the domain list with the domain name and an identifier or an address of the minted DN NFT.

In a further embodiment the DN NFT comprises an address of a wallet, wherein the smart contract is embodied to change data of the DN NFT upon a request from the wallet with the address that is stored in the DN NFT. This method allows handling the DN NFT by wallets.

In a further embodiment the smart contract is embodied to provide upon a request at least one DN NFT that can be bought and transferred to another wallet, and wherein especially the smart contract changes the address of the wallet in the DN NFT after a predetermined amount of token is transferred to a predetermined wallet. Therefore, DN NFTs can be handled as usual NFTs in the blockchain.

In a further embodiment the smart contract is embodied to mint a DN NFT for a top level domain with a predetermined IP address.

In a further embodiment, the smart contract is embodied to mint a DN NFT for a subdomain of a top level domain.

In a further embodiment, a smart contract related to a domain name system is deployed on the blockchain by using a software tool, wherein the software tool runs on a computer, wherein at step 101 a deployer instructs the software tool by using the computer to execute a runHardhatDeployScript()-function, wherein the runHardhatDeployScript()-function is responsible for deploying a domain name system related smart contract on the blockchain, wherein in a next step 102 the software tool interacts with a network computer through a remote procedure call (RPC call), wherein the software tool sends a request to the network computer instructing it to deploy the first smart contract using a predetermined top-level domain (TLD), the network computer processes at the next step 103 the request and deploys the first smart contract specified by the top-level domain, wherein the first smart contract is related to the domain name system and is specifically designed to handle functionalities and operations within the domain name system.

In a further embodiment, a process of minting a domain name NFT is performed on the blockchain, wherein a user interacts by a computer with a frontend software that runs on the computer, wherein the user connects at step 301 a wallet that runs on the computer to the frontend software by executing a connectWallet function, wherein then the frontend software displays at step 302 a form on a display of the computer to the user allowing them to mint a domain name non-fungible token, wherein the user provides at step 303 the desired domain name by inputting it into the displayed form and then clicks a "Mint" button of the display of the computer at step 304 to initiate the minting process in the blockchain, wherein the frontend software validates the input and retrieves minting costs, which are then presented to the user through the wallet at step 305, wherein the user confirms at step 306 the minting costs and proceeds to send the required funds by interacting with the frontend software , wherein the frontend software facilitates this process by handling the user's confirmation and sending the transaction request via a remote procedure call (RPC call) to a network computer at step 307, wherein the network computer receives the minting request and forwards it at step 308 to a first smart contract (SmartContractW3NS), which is the smart contract responsible for managing domain names within the domain name system on the blockchain, wherein the first smart contract (SmartContractW3NS) processes the request and initiates the minting process for the specified domain name, wherein finally the first smart contract interacts at step 309 with a domain NFT smart contract to create a domain name NFT (non-fungible token) representing the minted domain name, wherein the domain name NFT is created with the specified domain name and is associated with a blockchain address of the wallet of the user as the owner at step 310.

In a further embodiment, a process of setting an IP address for a domain name is performed, wherein a user initiates the process by connecting at step 701 their wallet that runs on a computer to the frontend software that runs on the computer, wherein the frontend software then displays the domain name NFTs owned by the wallet of the user on a display of the computer, wherein the user selects the desired domain name for which they want to set an IP record at step 703 by inputting the desired domain name in the computer, wherein then they click at step 704 the "Create ARecord for Domain" button on the frontend software to begin the IP record creation process, wherein the frontend software presents at step 705 the creation costs to the user through their wallet, wherein the user confirms the costs and proceeds with the transaction at step 706 by an input in the computer indicating their intention to set an IP record for the domain name, wherein the frontend software sends at step 707 a remote procedure call (RPC) request to the network computer, especially the "setARecordForDomain()" function, providing an IP address and the domain name as parameters, wherein the network computer receives the request and forwards it at step 708 to the first smart contract, wherein the first smart contract verifies that the wallet of the user is the owner of the domain name NFT associated with the domain at step 709, wherein only the owner of the domain name NFT can set an IP record for a domain, wherein if the user is the owner of the domain name NFT, then the first smart contract sets at step 710 the specified IP record for the domain, wherein this associates the domain with the provided IP address, wherein preferably the IP record is an address record, which is a type of DNS record that maps a domain name to its corresponding IP address.

In a further embodiment, a process of listing a domain name for sale on a marketplace is performed, wherein a seller begins at step 801 by connecting their wallet that runs on the computer to the frontend software using for example a connectWallet-function, wherein the frontend software displays at step 802 the domain name NFTs owned by the wallet of the seller on a display of the computer, wherein the seller selects at step 803 the domain they want to sell by an input in the computer and clicks at step 804 a "List Domain" button on the frontend software, wherein the frontend software prompts at step 805 the seller to allow the marketplace to transfer the domain name NFT by showing the required allowance on the display of the computer, wherein the seller confirms the allowance at step 806, wherein next the frontend software presents at step 807 the listing costs to the seller through their wallet on a display of the computer, wherein the seller confirms the costs at step 808 and proceeds to list the domain for sale, wherein the frontend software sends then at step 809 a remote procedure call (RPC) request to the network computer, especially the "listDomain()" function, providing the domain name and the desired price as parameters, wherein the network computer forwards at step 810 the request to the second smart contract (MarketplaceContract), which verifies at step 811 that the wallet of the seller is the owner of the domain name NFT associated with the domain, wherein only the owner of the domain NFT can list it on the marketplace, wherein if the wallet of the seller is the owner of the domain NFT, the second smart contract lists the domain on the marketplace at step 812, indicating that it is available for sale.

In a further embodiment, a process of a buyer purchasing a domain name from a marketplace is performed, wherein a buyer begins by connecting their wallet that runs on the computer to the frontend software at step 901 using for example a connectWallet-function, wherein the frontend software displays at step 902 the domain name NFTs listed on a second smart contract, wherein the buyer selects the domain name NFT they wish to purchase at step 903 by an input in the computer and clicks a "Buy Domain" button on the frontend software at step 904, wherein the frontend software presents the costs associated with the purchase to the buyer at step 905 through their wallet on a display of the computer, wherein the buyer confirms the costs and proceeds with the purchase by an input in the computer at step 906, wherein the frontend software sends at step 907 a remote procedure call (RPC) request to the network computer, especially the "buyDomain()" function, providing the domain name as a parameter, wherein the network computer forwards at step 908 the request to the second smart contract, which handles the purchase transaction, wherein the second smart contract confirms that the domain is available for purchase, wherein upon a successful verification of the purchase of the domain at step 910, the second smart contract initiates at step 911 a transfer of the domain name NFT from the wallet of the seller to the wallet of the buyer using for example a "transferFrom" function, wherein the transfer may be facilitated at step 912 by the first smart contract, which manages ownership and transfers of domain name NFTs, wherein after the transfer, the buyer becomes at step 913 the new owner of the domain name NFT.

In a further embodiment, a request with a domain name is sent to a blockchain, wherein the request is to search a domain name non-fungible-token (DN NFT) that comprises the domain name and an IP address of the domain name in the blockchain and to put out the IP address of the DN NFT.

In a further embodiment, the request with the domain name is sent to the blockchain via port 53 of an UDP protocol or TCP protocol.

In a further embodiment, the request with the domain name is checked before sending the request to the blockchain, wherein the request is checked whether it comprises a domain name that is stored in the blockchain or outside the blockchain, wherein the request is sent to the blockchain if the request comprises a domain name that is stored in the blockchain, and wherein the request is sent to a domain name system outside the blockchain if the request comprises a domain name that is stored outside the blockchain.

A blockchain network for operating a domain name system is provided, wherein the blockchain network comprises a smart contract, wherein the smart contract handles at least one domain name non-fungible-token (DN NFT), wherein the DN NFT comprises a domain name and an IP address that is assigned to the domain name, wherein a request with a domain name is received by the blockchain network to resolve for the domain name a corresponding IP address of the domain name, wherein the smart contract of the blockchain network searches by using the domain name the DN NFT in the blockchain network that is assigned to the domain name, wherein the smart contract reads out the IP address of the DN NFT, wherein the blockchain network puts out as a response to the request at least the IP address that is assigned to the domain name in the DN NFT of the blockchain network.

A blockchain network comprises computers that run a blockchain. The blockchain is a computer program that performs a digital ledger that securely records and verifies transactions or information across multiple computers. The blockchain may comprise at least one smart contract. The proposed method and system may be used for any kind of blockchain program.

In an embodiment, a request to mint for a domain name and for an IP address a domain name non-fungible-token (DN NFT) is received by the blockchain network, wherein a smart contract of the blockchain network mints the DN NFT that comprises the domain name and the IP address in the blockchain network.

In a further embodiment the smart contract lists the minted DN NFT in a domain list with the domain name and a blockchain address of the DN NFT.

A computer-implemented method for operating a domain name system is provided, wherein a request with a domain name is sent to a blockchain network with the request to search a domain name non-fungible-token (DN NFT) that comprises the domain name and the IP address in the blockchain network and to put out the IP address of the DN NFT.

A computer-implemented method for operating a domain name system is provided, wherein a request for a domain name and an IP address is sent to a blockchain network with the request to mint a domain name non-fungible-token (DN NFT) that comprises the domain name and the IP address in the blockchain network.

In an embodiment the request with the domain name is sent to the blockchain network to resolve for the domain name the corresponding IP address of the domain name via port 53 of an UDP protocol or TCP protocol.

In an embodiment, the request with the domain name is checked before sending the request to the blockchain network, wherein the request is checked whether it comprises a domain name that is stored in the blockchain or outside the blockchain, wherein the request is sent to the blockchain network if the request comprises a domain name that is stored in the blockchain, and wherein the request is sent to a domain name system outside the blockchain if the request comprises a domain name that is stored outside the blockchain. This method allows to combine a domain name system that is operated by a blockchain and a domain name system that is operated outside the blockchain.

A computer is provided that is embodied to perform any one of the proposed methods.

A computer program product is provided with instructions for performing any one of the proposed methods claims.

The IP address of the domain name may be any kind of IP address.

The provided method and blockchain network may use any kind of DNS record types.

The above-described features, characteristics and advantages of the present invention, and the manner in which they are achieved, will become clearer and more readily understood in the context of the following description of the embodiments, which will be explained in more detail in conjunction with the drawings, wherein
figure 1 shows a schematic view of a computer that is connected with a blockchain network,
figure 2 shows a process for deploying a smart contract for a top level domain on the blockchain,
figure 3 shows a process for minting an NFT with a domain name in the blockchain,
figure 4 shows a process for creating a subdomain in the blockchain,
figure 5 shows a process for setting an IPv4 address for a subdomain in the blockchain,
figure 6 shows a process for setting an IPv6 address for a subdomain in the blockchain,
figure 7 shows a process for setting an IPv4 address for a domain in the blockchain,
figure 8 shows a process for listing a domain for sale on a marketplace in the blockchain,
figure 9 shows a process for purchasing a domain on a marketplace in the blockchain, and
figure 10 shows a process for resolving a domain name in the blockchain.,

### 1.1 Blockchain

Blockchain is a digital ledger that securely records and verifies transactions or information across multiple computers. It allows people to create and store information in a transparent and tamper-resistant way, making it ideal for applications like secure financial transactions, supply chain management, and even voting systems. Think of it as a shared and unchangeable record book that everyone can access and trust, eliminating the need for intermediaries and enhancing security and transparency.

The proposed method and system may be used for any kind of blockchain. In this embodiment as an example Ethereum blockchain is used for explaining the proposed method and system. The Ethereum blockchain may fulfil for example the Ethereum standards, for example ERC 20, ERC 721 and/or ERC 1155. The proposed DN NFTs, and the proposed smart contracts, the proposed wallet and the proposed methods may fulfil the corresponding Ethereum standards. Specific functions as for example authentication of a wallet by accessing the blockchain are not described but performed as usual in blockchain application and/or in Ethereum blockchain application.

### Ethereum

Ethereum is a decentralized blockchain platform that goes beyond just recording transactions. It enables the creation and execution of smart contracts, which are self-executing agreements with predefined rules. These contracts can automatically trigger actions and transactions based on certain conditions, removing the need for intermediaries. Ethereum also has its own cryptocurrency called Ether (ETH), which fuels the platform and incentivizes participants. In simpler terms, Ethereum expands on the capabilities of blockchain by allowing developers to build decentralized applications (DApps) that can automate processes and interactions in a secure and transparent manner.

### 1.1.2 Ethereum Node

An Ethereum node, for example a network computer 3, 4, 5, 6, is a participant in the Ethereum network that helps maintain the integrity of the blockchain. It is essentially a computer or device running software that allows it to communicate and interact with other nodes on the network.

Nodes play a role in the Ethereum ecosystem by validating transactions, storing a copy of the blockchain, and participating in the consensus process to ensure the network reaches agreement on the state of the blockchain. They also execute smart contracts and propagate information across the network.

Running an Ethereum node allows users to access the Ethereum network directly, without relying on third-party services. It enables users to verify transactions, monitor the network, and interact with decentralized applications. Nodes contribute to the security and decentralization of the Ethereum network by adding redundancy and resilience, as well as helping to enforce the consensus rules of the network.

In summary, an Ethereum node is a key component of the Ethereum network, responsible for maintaining the blockchain, validating transactions, executing smart contracts, and contributing to the decentralized nature of the platform.

### 1.1.3 Remote Procedure Calls (RPC)

A Remote Procedure Call (RPC) is a mechanism that allows a program or application to request and execute procedures or functions on a remote computer or node. In the context of an Ethereum node, it refers to the ability to interact with the node and its functionalities remotely.

An Ethereum node typically exposes an RPC interface that enables external programs or applications to communicate with it over a network connection. This RPC interface provides a set of methods or functions that can be called to perform various operations on the Ethereum blockchain.

Using the RPC interface of an Ethereum node, developers and users can send requests to retrieve information, submit transactions, execute smart contracts, and access other blockchain-related functionalities. It allows them to interact with the Ethereum network without needing to run their own local node or directly manage the complexities of the underlying blockchain protocols.

For example, an application could use the RPC interface of an Ethereum node to query the balance of an Ethereum address, retrieve transaction details, or deploy and interact with smart contracts. By making RPC calls to the node, the application can seamlessly access and utilize the features and data available on the Ethereum network.

In summary, an RPC interface on an Ethereum node enables remote programs or applications to communicate with and utilize the functionalities of the node, such as retrieving blockchain data, executing transactions, and interacting with smart contracts. It provides a convenient way to interact with the Ethereum network without the need for direct blockchain management.

### 1.1.4 TestNet

A TestNet is an optional separate network environment created to test and experiment with blockchain platforms like Ethereum. It serves as a sandbox for developers, allowing them to deploy and test their smart contracts, applications, and network configurations without using real or valuable assets.

In the case of Ethereum, there are several TestNets available, such as Goerli, Ropsten, Kovan, and Rinkeby. These TestNets simulate the functionality of the main Ethereum network but operate with test versions of Ether and have their own distinct network identifiers. They are designed to facilitate development, debugging, and the exploration of new features or upgrades before deploying them to the live Ethereum network.

TestNets like Goerli, Ropsten, Sepolia, and Kovan provide developers with a decentralized testing environment that closely resembles the Ethereum network. They allow for the deployment and interaction with smart contracts, the testing of transaction flows, and the simulation of real-world scenarios. These TestNets are for ensuring the stability, security, and compatibility of applications and protocols before they are deployed on the main Ethereum network.

In summary, a TestNet is a dedicated network environment that developers use to experiment, test, and refine their applications and smart contracts without affecting the real Ethereum network. TestNets like Goerli, Ropsten, Sepolia, and Kovan provide a safe space for developers to iterate and ensure the reliability of their Ethereum-based projects.

For this project, we use the Sepolia TestNet only. All the contracts will be deployed there.

### 1.1.5 Hardhat

Hardhat is an optional versatile development tool and task runner for Ethereum smart contract development. It simplifies the process of compiling, deploying, testing, and debugging smart contracts. With its comprehensive features and extensibility through plugins, Hardhat enhances the development workflow and ensures the reliability and correctness of smart contracts. It supports multiple Ethereum networks, provides a testing framework, and offers advanced debugging and logging capabilities. Overall, Hardhat is a popular choice among Ethereum developers for its efficiency and flexibility in smart contract development.

### 1.1.6 Wallet

A wallet, in the context of blockchain and cryptocurrencies like Ethereum, is a digital tool or application that allows users to securely store, manage, and interact with their digital assets. It serves as a personal interface to access and control ownership of cryptocurrencies.

A wallet typically consists of two main components: a public address and a private key. The public address is a unique identifier that represents the user's wallet and can be shared with others for receiving funds. The private key, on the other hand, is a secret cryptographic code that grants ownership and control over the associated funds.

Wallets can come in various forms, such as software applications, hardware devices, or even paper-based solutions. They provide functionalities like generating new addresses, sending and receiving transactions, and managing balances.

When using a wallet, users can initiate transactions by signing them with their private key, proving their ownership of the funds. Wallets also store a transaction history, allowing users to keep track of their activity.

Additionally, wallets can interact with decentralized applications (DApps) built on the blockchain. Users can authenticate and authorize transactions within DApps using their wallet, ensuring secure and transparent interactions.

Overall, a wallet is a digital tool that enables users to store, manage, and transact with their cryptocurrencies for example DN NFT or NFT securely. It provides a user-friendly interface for accessing and controlling digital assets while maintaining the confidentiality of private keys. The wallet may fulfil the respective Ethereum standards.

### 1.2 Smart Contract

A smart contract is a self-executing computer program that automatically enforces and executes predefined agreements or conditions on a blockchain, especially the Ethereum blockchain. It operates on the principles of blockchain technology, such as transparency, immutability, and decentralization.

Unlike traditional contracts, which rely on intermediaries or legal systems to enforce terms, smart contracts eliminate the need for intermediaries by automating the execution and enforcement of agreements. They are written in code and stored on the blockchain, making them tamper-resistant and transparent to all participants.

Smart contracts are capable of defining rules, conditions, and actions that are triggered based on predefined events or inputs. Once the conditions are met, the contract executes the specified actions autonomously and transparently, without any possibility of censorship or interference.

For example, on the Ethereum blockchain, developers can create smart contracts using programming languages like Solidity. These contracts can represent a wide range of agreements, such as financial transactions, supply chain processes, voting systems, or even decentralized applications (DApps).

Smart contracts enable trust and security by removing the need to rely on centralized authorities or intermediaries. They ensure that all participants follow the agreed-upon rules and automate the process of transferring assets or executing actions, reducing costs, and eliminating potential disputes.

In summary, a smart contract is a self-executing program that automates the enforcement and execution of agreements on a blockchain. It eliminates the need for intermediaries, enhances transparency, and enables secure and decentralized interactions between parties.

### 1.2.1 NFT

Non-fungible tokens (NFTs) are unique digital assets that represent ownership or proof of authenticity of various items, including artworks, music, videos, virtual real estate, and even domain names. While NFTs have gained popularity in various industries, one notable application is the use of NFTs for transferable domain names.

Domain NFTs, also named domain tokens, leverage blockchain technology to create a decentralized and secure system for managing and trading domain names. Each domain NFT represents ownership and control of a specific domain and contains relevant information about the domain name, registration details, and additional metadata.

By using domain NFTs, individuals and businesses can directly own and control their domain names without relying on centralized authorities. The blockchain ensures transparency, immutability, and secure transfer of ownership, reducing the risk of fraud or disputes. Domain NFTs open up new possibilities for fractional ownership, leasing, and dynamic markets for digital real estate.

In summary, NFTs are unique digital assets that have revolutionized the ownership and trading of various digital items. Among their applications, domain NFTs provide a decentralized and transparent system for managing and transferring domain names securely, empowering individuals and businesses to directly own and control their digital domains. The NFT is stored in a block of the blockchain. The unique identifier may for example be a unique blockchain address within the used blockchain for Ethereum blockchain.

An example for the NFT is a domain NFT that may comprise a domain name and an IP address and for example a unique identifier and/or a wallet address.

### 1.2.2 Deployment

In the context of smart contracts, a deployment refers to the process of deploying or creating an instance of a smart contract on a blockchain network.

When a smart contract is developed, it needs to be deployed onto a specific blockchain platform, such as Ethereum, for it to be operational and interactable. Deployment involves taking the compiled code of the smart contract and publishing it onto the blockchain, making it available for execution and interaction.

During the deployment process, a unique address is generated for the deployed smart contract on the blockchain. This address acts as an identifier and allows users and other contracts to interact with the deployed contract by calling its functions or sending transactions to it.

Once deployed, the smart contract becomes a part of the blockchain's state and is replicated across the network's nodes. It is stored in a tamper-resistant and transparent manner, ensuring that its code and data are immutable and accessible to all participants on the network.

Deploying a smart contract is a critical step that enables the contract to fulfill its intended purpose. It makes the contract's functionalities available to users, allowing them to interact with it, send transactions, and trigger the execution of its predefined logic.

In summary, the deployment of a smart contract refers to the process of publishing and creating an instance of the contract on a blockchain network. It involves generating a unique address for the contract, making it accessible for interaction, and establishing its presence on the blockchain for secure and transparent execution.

### 1.2.3 Minting

In the context of non-fungible tokens (NFTs), minting refers to the process of creating a new, unique instance of an NFT. It is the act of generating and assigning a specific token to represent a distinct digital asset on a blockchain.

When an NFT is minted, a smart contract is typically involved. The smart contract defines the characteristics, properties, and metadata of the NFT, such as its name, description, and associated content. Minting involves executing the smart contract's mint function, which creates a new token and assigns it a unique identifier. The NFT is stored in a block of the blockchain. The unique identifier may for example be a unique blockchain address within the used blockchain for Ethereum blockchain.

During the minting process, relevant information about the NFT, including its ownership and metadata, is stored on the blockchain. This ensures transparency, immutability, and verifiability of the NFT's creation and ownership history.

Minting is often performed by the creator or an authorized entity, and it establishes the initial ownership and authenticity of the digital asset represented by the NFT. Once minted, the NFT can be bought, sold, or transferred to other wallets or individuals.

Minting plays a role in enabling the creation and expansion of NFT-based ecosystems, empowering artists, creators, and collectors to tokenize and trade unique digital assets in a secure and transparent manner.

In summary, minting is the process of creating a new, unique instance of an NFT. It involves executing a smart contract's mint function, which assigns a specific identifier to represent a distinct digital asset on the blockchain. Minting establishes the initial ownership and authenticity of the NFT, facilitating its subsequent trading and transfer within NFT-based ecosystems. An example for the NFT is a domain NFT that may comprise a domain name and an IP address and for example a unique identifier and/or a wallet address.

### 1.2.4 Transfer

In the context of non-fungible tokens (NFTs), a transfer refers to the act of transferring ownership of an NFT from one wallet or address to another. It allows the NFT holder to move the token to a different wallet, effectively changing the possession and control of the digital asset on the blockchain.

The transfer process of an NFT involves interacting with the smart contract that governs the NFT's functionality. The smart contract includes a transfer function, which allows the current owner of the NFT to initiate the transfer by specifying the recipient's wallet address.

To initiate a transfer, the current owner of the NFT creates a transaction that includes the transfer function call along with the necessary parameters, such as the recipient's address and the specific NFT identifier or token ID. This transaction is then submitted to the blockchain network for processing.

Once the transaction is confirmed and added to a block of the blockchain, the ownership of the NFT is transferred to the designated recipient. The blockchain's decentralized and immutable nature ensures that the transfer is securely recorded and cannot be altered.

After the transfer is completed, the recipient becomes the new owner of the NFT and gains control over the associated digital asset. They can now manage, display, or transfer the NFT further based on their preferences.

Transferring NFTs provides a means for buying, selling, or gifting these unique digital assets. It enables collectors, artists, and users to trade NFTs in a peer-to-peer manner, removing the need for intermediaries and facilitating direct ownership transfers.

In summary, the transfer of an NFT involves the process of changing ownership and control of the digital asset from one wallet to another. It is facilitated by interacting with the NFT's smart contract and initiating a transfer transaction on the blockchain. The transfer allows for the secure and transparent exchange of NFTs, empowering individuals to buy, sell, or gift these unique digital assets. The transfer of the ownership of the NFT may be performed by a change of the wallet address in the NFT, especially the DN NFT. If the DN NFT is transferred to a new owner then for example the wallet address of the new owner is stored in the DN NFT.

### 1.2.5 W3NS TLD Smart Contract

The W3NS smart contract allows users to manage and trade domain NFT s (non-fungible tokens) on the W3NS platform. W3NS is an abbreviation for web3 same service. The smart contract includes functions such as creating and resolving domain names, creating subdomains, setting and retrieving IP address records (for example A and AAAA records), and transferring ownership of domain NFT s. The IP address records are not limited to the A or AAAA records, but all DNS record types can be used. In the following A and AAAA records are used only as examples.

Here are some features and functions provided by the W3NS smart contract:
- Constructor: Initializes the smart contract with the SVG XML and top-level domain parameters.
- Domain Creation: Users can mint domain NFT s by calling the "mintDomainNft" function and providing a domain name as a parameter. The function requires payment of a domain entry fee.
- Subdomain Creation: Users can create subdomains under their owned domains using the "createSubdomain" function. This function also requires payment of a domain entry fee.
- IP Address Records: The smart contract allows users to set and retrieve IP address records for domains and subdomains. The functions "setARecordForDomain," "setAAAARecordForDomain," "setARecordForSubdomain," and "setAAAARecordForSubdomain" are used to set IP address records, while the functions "getARecordForDomain," "getAAAARecordForDomain," "getARecordForSubdomain," and "getAAAARecordForSubdomain" retrieve the IP address records.
- Ownership and Transfer: Users can transfer ownership of domain NFT s by calling the "safeTransferFrom" function. The function requires the sender to be the current owner of the token (NFT or DN NFT) and the recipient to be a valid address within the blockchain for example a valid wallet address.
- Approval and Authorization: The smart contract provides functions for approval and authorization of operators. Users can approve another address to manage their domain NFT s using the "approve" function. The "setApprovalForAll" function is used to set the approval status for an operator.
- Domain Resolution: Users can resolve a domain name to retrieve its associated IP address by calling the "resolveDomain" function. When this function is called, the smart contract searches for a DN NFT with the domain name searched for. For example, a list of domain names and associated DN NFTs may be stored in the blockchain. In this way, a mapping is made between the domain name and the DN NFT that stores the IP address for the domain name. The Smart contract reads out the IP address of the DN NFT that also contains the domain name searched for and puts out the IP address to a computer 1 that searches for the IP address.
- Fee Management: The smart contract includes functions for managing fees. The "getDomainEntryFee" function retrieves the current domain entry fee, while the "setDomainEntryFee" function allows the contract owner to set the fee. The "getFeeRecipient" function retrieves the current recipient address for collected fees, and the "setFeeRecipient" function sets a new recipient address.
- Event Logging: The smart contract emits various events such as "CreateDomain," "CreateSubdomain," "DomainARecord," "DomainAAAARecord," and "Transfer" to notify listeners about domain creation, subdomain creation, IP address record updates, and token transfers.
- The word token refers to DN NFTs and NTFs.

### 1.2.6 Marketplace Smart Contract

The W3NS Marketplace or the marketplace is a smart contract that provides functionalities for buying and selling NFTs (Non-Fungible Tokens) on the blockchain. The contract defines a set of functions and events that can be interacted with using its ABI (Application Binary Interface). Here's a breakdown of the functions and events defined in the ABI:

### Functions:

- buyltem: Allows a user to buy a listed NFT by providing the NFT address and token ID. This function is payable, meaning the buyer must send Ether along with the transaction to pay for the NFT.
- cancelListing: Allows the seller to cancel a listing for a specific NFT by providing the NFT address and token ID. This function can only be called by the seller and does not require any payment.
- checkRoyaltyForltemWithPrice: Retrieves the royalty information for an NFT with a given price. It takes the NFT address, token ID, and price as inputs and returns the royalty recipient address and the royalty amount.
- getListing: Retrieves the current listing information for a specific NFT. It takes the NFT address and token ID as inputs and returns the price and seller address of the listing.
- getProceeds: Retrieves the total proceeds (earnings) of the contract for a specific seller address.
- listltem: Allows the seller to list an NFT for sale by providing the NFT address, token ID, and price. This function creates a new listing for the NFT.
- owner: Retrieves the address of the contract owner (for example wallet address).
- renounceOwnership: Allows the current contract owner to renounce their ownership, giving up control of the contract.
- transferOwnership: Allows the current contract owner to transfer ownership to a new address (for example wallet address).
- updateListing: Allows the seller to update the price of an existing listing for a specific NFT by providing the NFT address, token ID, and the new price.
- withdrawProceeds: Allows the seller to withdraw their proceeds (earnings) from the contract.

The information provided by the Marketplace smart contract may be displayed on a display of the computer 1 for example.

### Events:

1. ItemBought: Fired when an NFT is successfully purchased. It provides information about the buyer, NFT address, token ID, price, and royalty amount.
2. ItemCanceled: Fired when a listing is canceled by the seller. It provides information about the seller, NFT address, and token ID.
3. ItemListed: Fired when an NFT is successfully listed for sale. It provides information about the seller, NFT address, token ID, price, and royalty amount.
4. Ownership Transferred: Fired when ownership of the contract is transferred from one address to another. It provides information about the previous owner and the new owner.

NFT refers to DN NFT.

Fired means that the respective information is stored in a block of the blockchain.

### 1.3 Frontend

In the decentralized domain name system W3NS, a frontend is a user interface that allows users to interact with the W3NS ecosystem. It serves as a gateway for users to access and manage decentralized domain names and top-level domains (TLDs).

The frontend provides users with a convenient way to search for available domain names, list their own domains for sale, and purchase domains from other users. It also enables users to register new TLDs, check domain name availability, transfer ownership of TLDs, renew TLD registrations, and manage associated metadata.

By utilizing the frontend, users can seamlessly navigate and engage with the W3NS marketplace and the W3NSTIdNft contract, which are the core components of the W3NS ecosystem. The frontend simplifies the process of buying and selling domain names, as well as managing TLDs, making it more accessible to users.

Overall, the frontend plays a role in facilitating user interaction with the decentralized domain name system, enabling users to participate in domain-related activities and contribute to the growth and development of the W3NS ecosystem.

### 1.4 Browser

In the context of the decentralized domain name system W3NS, a browser serves as a fundamental tool for users to access and interact with decentralized websites and applications.

When a user enters a domain name in the browser's address bar, the browser acts as a client and initiates a request to resolve the domain name into its corresponding decentralized address. In the case of W3NS, the browser interacts with the W3NS ecosystem to obtain the decentralized address associated with the entered domain name.

The browser then uses the decentralized address to establish a connection with the decentralized website or application hosted on a peer-to-peer network. It retrieves the website's content and renders it in a user-friendly format, allowing users to view and interact with the decentralized website or application.

Additionally, the browser plays a role in maintaining the security and privacy of users in the decentralized domain name system. It verifies the authenticity and integrity of the decentralized websites and applications by utilizing cryptographic mechanisms, such as digital signatures and secure connections (HTTPS).

Moreover, the browser may provide additional features and functionalities specific to the decentralized domain name system. For example, it may integrate with wallet software to enable seamless cryptocurrency transactions within decentralized applications, or it may support decentralized storage protocols to retrieve and store data from distributed networks.

Overall, the browser acts as a gateway for users to explore, access, and interact with decentralized websites and applications facilitated by the W3NS domain name system. It bridges the gap between users and the decentralized web, offering a familiar and intuitive interface for users to navigate and engage with decentralized content.

### 1.5 Resolver

In the W3NS system, a resolver plays a role in converting W3NS domain names into their corresponding IP addresses. It acts as an intermediary that facilitates the translation of human-readable domain names, such as "example.w3ns", into machine-readable IP addresses, such as "192.168.0.1" (IPv4) or "2001:0db8:85a3:0000:0000:8a2e:0370:7334" (IPv6).

When a user enters a W3NS domain name in their browser or application, the resolver is responsible for querying the W3NS system to retrieve the associated IP address information. The resolver communicates with the W3NS infrastructure, which stores and manages the mapping between W3NS domain names and their corresponding IP addresses.

To resolve a W3NS domain name, the resolver follows a series of steps:
1. Query: The resolver receives the W3NS domain name (e.g., "example.w3ns") as input.
2. W3NS Lookup: The resolver sends a request to the W3NS system for example the W3NS resolver, specifically the configured W3NS infrastructure, to retrieve the IP address information associated with the domain name.
3. Response: The W3NS system responds with the IP address information, including an IP address for example A records (IPv4 addresses) and AAAA records (IPv6 addresses) configured for the domain name.
4. Translation: The resolver extracts the relevant IP addresses from the response, translating the W3NS domain name into the corresponding IPv4 and IPv6 addresses.
5. Result: The resolver provides the resolved IP addresses (A and AAAA records) to the browser or application that initiated the query.
6. Connection: The browser or application can then establish a connection to the resolved IP address, allowing users to access the decentralized website or application associated with the W3NS domain name.

By performing these steps, the resolver enables seamless and transparent access to decentralized websites and applications by resolving W3NS domain names to their respective IP addresses. It acts as a bridge between the user's browser or application and the underlying W3NS infrastructure, ensuring that users can access decentralized content using familiar domain names while leveraging the power of the decentralized domain name system.

### 1.5.1 UserPC

In the context of resolving W3NS domains, the user's PC plays a role in the resolution process. To enable the resolution of W3NS domains, the user's PC needs to have a resolver integrated into its operating system or network settings. This integration allows the resolver to intercept DNS queries originating from the user's applications or web browsers.

When a user enters a W3NS domain name in their browser, their PC's resolver intercepts the DNS query before it reaches the default DNS resolver. The intercepted query is then redirected to the W3NS resolver, which is responsible for handling W3NS-specific domain name resolution.

The user's PC, acting as the intermediary, facilitates the communication between the application making the DNS query (e.g., the user's browser) and the W3NS resolver. It ensures that DNS queries for W3NS domains are routed to the appropriate resolver for W3NS resolution instead of being resolved through the traditional DNS system.

By configuring the resolver on the user's PC, the W3NS resolution process is seamlessly integrated into the user's existing network infrastructure. This integration enables the user's PC to participate in the resolution of W3NS domain names and facilitates the translation of W3NS domains into their corresponding IP addresses, allowing users to access decentralized websites and applications using familiar domain names.

The userPC may be a computer 1 or a mobile phone or a laptop that comprises a processor and a memory and that is able to perform the described functions.

### 1.5.2 Default DNS Resolver

In the context of the W3NS system, the role of the default DNS resolver configured in an operating system is to handle the resolution of traditional domain names that are not part of the W3NS domain system. This default resolver is responsible for translating domain names (e.g., example.com) into their corresponding IP addresses using the traditional Domain Name System (DNS). The default DNS resolver is optional and may be omitted.

By working together, the default DNS resolver and the W3NS resolver ensure that both traditional domain names and W3NS domain names can be resolved correctly, allowing users to access websites and applications from both centralized and decentralized systems seamlessly.

### 1.5.3 Local Resolver

In the context of DNS resolution, the "local resolver" plays a role in managing the configured resolvers system-wide. The local resolver is a component of the operating system or network configuration that determines which resolvers to use for DNS resolution and in what order. It simply forwards requests to all the configured resolvers.

The local resolver acts as an intermediary between applications making DNS queries and the actual resolvers responsible for resolving those queries. It receives DNS queries from applications and determines which resolver(s) to forward those queries to.

### 1.5.4 W3NS Resolver

The W3NS resolver plays a role in the W3NS system by specifically handling the resolution of W3NS domains. It is responsible for mapping W3NS domains to their corresponding A-records (IPv4 addresses) and AAAA-records (IPv6 addresses) configured in the W3NS registry. The W3NS resolver is designed to work in conjunction with the traditional DNS resolution process.

When a DNS query for a W3NS domain is sent to the local resolver, it also forwards the query to the W3NS resolver.

The W3NS resolver performs the following steps to resolve a W3NS domain:
1. Receive Query: The W3NS resolver receives the DNS query for a W3NS domain name from the local resolver. The query includes the domain name, such as "example.w3ns" or "mydomain.w3ns".
2. Check W3NS Smart Contract: The W3NS resolver checks the W3NS Smart Contract of the blockchain, which contains the mapping information for W3NS domain names. It looks up the requested domain name in the registry for example in alist to find the associated IP address for example A-record(s) and AAAA-record(s). The information is stored in an DN NFT in a block of the blockchain. The DN NFT comprises a domain name and the assigned IP address.
3. Return Records: If the W3NS smart contract finds a DN NFT for the searched domain name, then it reads out the IP address from the DN NFT and sends the IP address to the W3NS resolver. The W3NS resolver returns the IP address associated with the domain to the local resolver. (Currently prefers AAAA-records over ARecords)
4. Local Resolver Forwarding: The W3NS resolver sends the resolved IP addresses back to the local resolver, which then forwards them to the requesting application or client for example the UserPC or computer 1.
5. Optional ilntegration with Local Resolver: The W3NS resolver may work in conjunction with the local resolver to ensure that W3NS domain resolution is seamlessly integrated into the overall DNS resolution process. The local resolver acts as an intermediary, forwarding DNS queries to both traditional resolvers and the W3NS resolver based on the configured order.

The role of the W3NS resolver is to provide specialized resolution for W3NS domains, enabling decentralized domain name resolution within the W3NS system. It connects with the W3NS Smart Contract (Registry for example a list), retrieves the IP address information from the respective DN NFT associated with W3NS domain name, and returns the resolved IP address to the local resolver for further processing and delivery to the requesting application or client.

By integrating the W3NS resolver into the DNS resolution process, the W3NS system ensures that W3NS domains can be resolved accurately and efficiently, allowing users to access decentralized websites and resources associated with W3NS domains seamlessly.

The W3NS resolver may run on the computer 1 that is used by a user to search an IP address for a domain name or the W3NS resolver is run on an external computer that is connected with the computer 1 for example via an internet connection.

### 1.6 General

### 1.6.1 User

In the context of the figures, a User represents the entity resolving a domain name.

### 1.6.2 Buyer

In the context of the figures, a Buyer represents the entity buying a domain NFT.

### 1.6.3 Seller

In the context of the figures, a Seller represents the entity selling a domain NFT.

### 1.6.4 Deployer

In the context of the figures, a Deployer represents the entity creating the smart contract. Meaning the deployer represents the owner of the whole system.

### 1.6.5 ARecord

An A-record, or Address record, is a type of DNS record that maps a domain name to its corresponding IPv4 address. It is used to translate human-readable domain names, such as example.com, into machine-readable IP addresses, such as 192.0.2.1. A-records play a role in facilitating the routing of internet traffic to the correct destination server based on the domain name provided.

### 1.6.6 AAAARecord

An AAAA-record, or IPv6 Address record, is a type of DNS record that maps a domain name to its corresponding IPv6 address. It is similar to an A-record but specifically designed for IPv6 addresses, which are 128 bits long compared to the 32-bit IPv4 addresses. AAAA-records enable the translation of human-readable domain names into the longer IPv6 addresses, allowing devices and services to communicate over IPv6 networks. They are essential for supporting the growing adoption of IPv6 and ensuring seamless connectivity in the modern internet ecosystem.

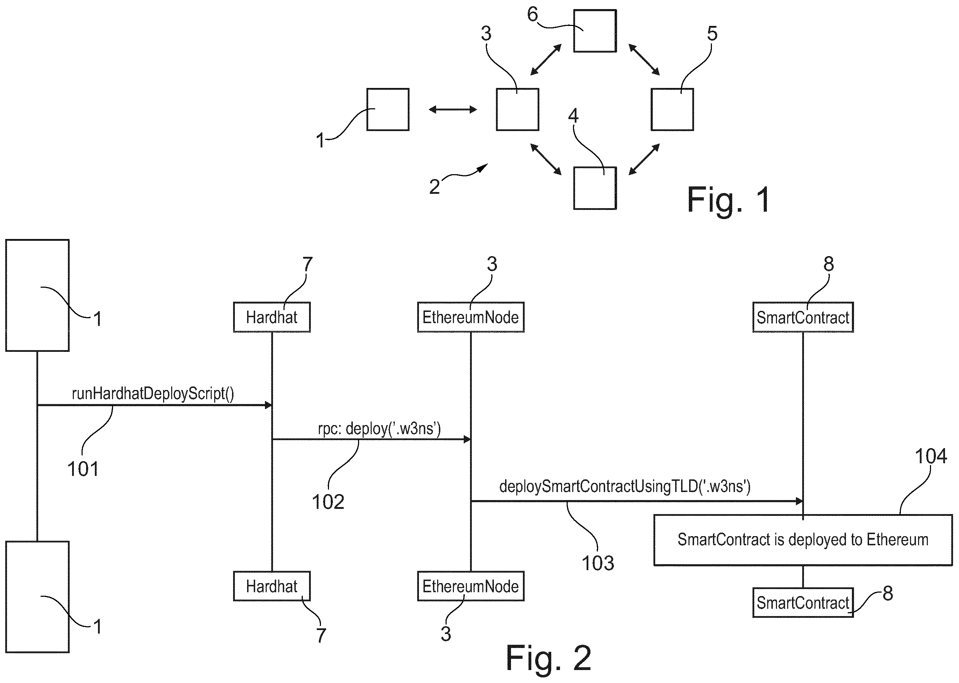

Fig. 1 depicts a schematic view of a blockchain network 2 that comprises several nodes or network computers 3,4,5,6. A computer 1 is arranged that is embodied to exchange data and/or control commands with a node of the blockchain network. The nodes or network computer 3-6 are embodied to operate a blockchain network for example the Ethereum blockchain. The computer 1 and the network computer 3 comprise interfaces that allow the communication between the computer 1 and the network computer 3. The computer 1 may be a personal computer, a laptop, a mobile phone or a virtual machine. The computer 1 is a User PC as explained before and may comprise a processor, a memory, a display, a keyboard or any kind of other human machine interface. The computer 1 may be connected via an internet connection with one or more computer of the network computer.

In figure 2, a sequence of events represents the deployment of a smart contract related to the w3ns system on the blockchain network 2 that operates an Ethereum blockchain using a software tool 7 called Hardhat. The figure involves three main participants: the deployer that uses the computer 1, the Hardhat software tool 7, and the network computer 3 of the blockchain network 2 that is in this case an Ethereum node. The Hardhat tool 7 runs on the computer 1.

The sequence begins with step 101 with the deployer instructing by using the computer 1 the Hardhat tool 7 to execute the "runHardhatDeployScript()" function. This "runHardhatDeployScript()" is responsible for deploying the w3ns-related smart contract on the blockchain of the blockchain network 2.

In the next step 102, the Hardhat tool 7 interacts with the network computer (EthereumNode) 3 through an RPC (Remote Procedure Call). The Hardhat tool 7 sends a request to the network computer 3, instructing it to deploy the first smart contract 8 using the top-level domain (TLD) '.w3ns'. The Network computer 3 processes at the next step 103 the request and deploys the first smart contract 8 specified by the TLD '.w3ns' . The first smart contract 8 is related to the w3ns system and is specifically designed to handle functionalities and operations within the decentralized domain name system. Finally, the first smart contract 8 is successfully deployed to the Ethereum network of the blockchain network 2 at step 103, and the figure indicates at step 104 that the deployment process is complete.

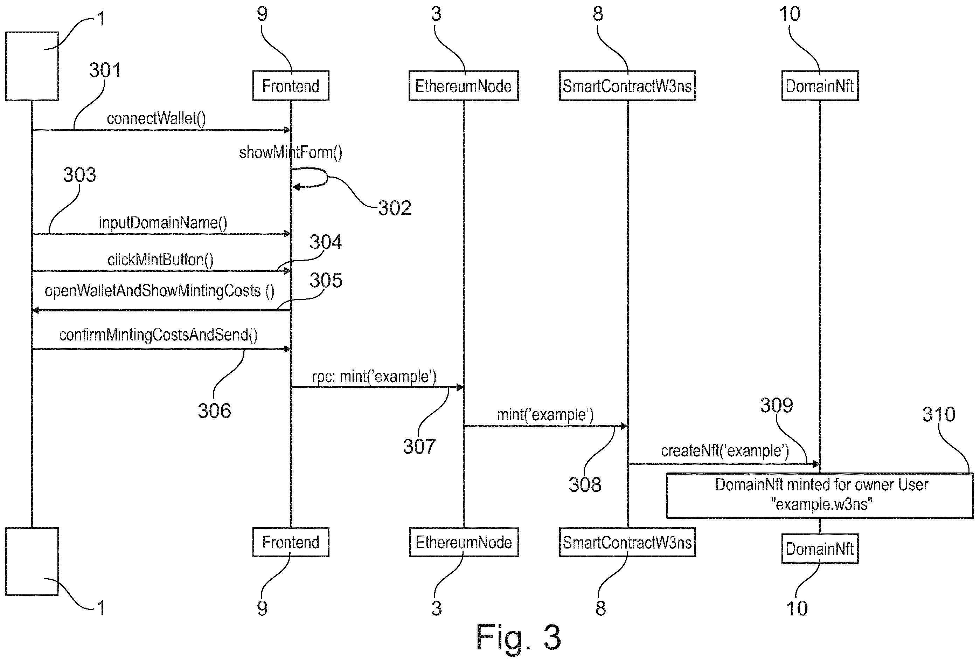

In figure 3, the sequence of events represents the process of minting a domain NFT within the w3ns system in the blockchain of the blockchain network 2. The figure involves several participants: a user with a computer 1, a frontend 9, the network computer 3, the first smart contract 8 (SmartContractW3NS), and a domain Nft smart contract 10. The frontend 9 is a software tool that runs on the computer 1. The sequence begins with the user interacting by the computer 1 with the frontend 9. The user connects at step 301 their wallet that runs on the computer 1 to the frontend 9 by executing the "connectWallet()" function.

Then, the frontend 9 displays at step 302 a form on a display of the computer 1 to the user, allowing them to mint a domain name non-fungible token (NFT) 10.

The user provides at step 303 the desired domain name by inputting it into the displayed form and then clicks a "Mint" button of the display of the computer 1 at step 304 to initiate the minting process in the blockchain. The frontend 9 validates the input and retrieves the minting costs, which are then presented to the user through the wallet at step 305. The user confirms at step 306 the minting costs and proceeds to send the required funds by interacting with
the frontend 9. The frontend 9 facilitates this process by handling the user's confirmation and sending the transaction request via an RPC (Remote Procedure Call) to the Network computer 3 at step 307. The Network computer 3 receives the minting request and forwards it at step 308 to the first smart contract 8 (SmartContractW3NS), which is the smart contract responsible for managing domain names within the w3ns system on the blockchain. The first smart contract 8 (SmartContractW3NS) processes the request and initiates the minting process for the specified domain name.

Finally, the first smart contract 8 interacts at step 309 with a domain Nft smart contract 10 to create a domain NFT (non-fungible token) 11 representing the minted domain name. The domain NFT is created with the specified domain name and is associated with a blockchain address of the wallet software of the user as the owner at step 310.

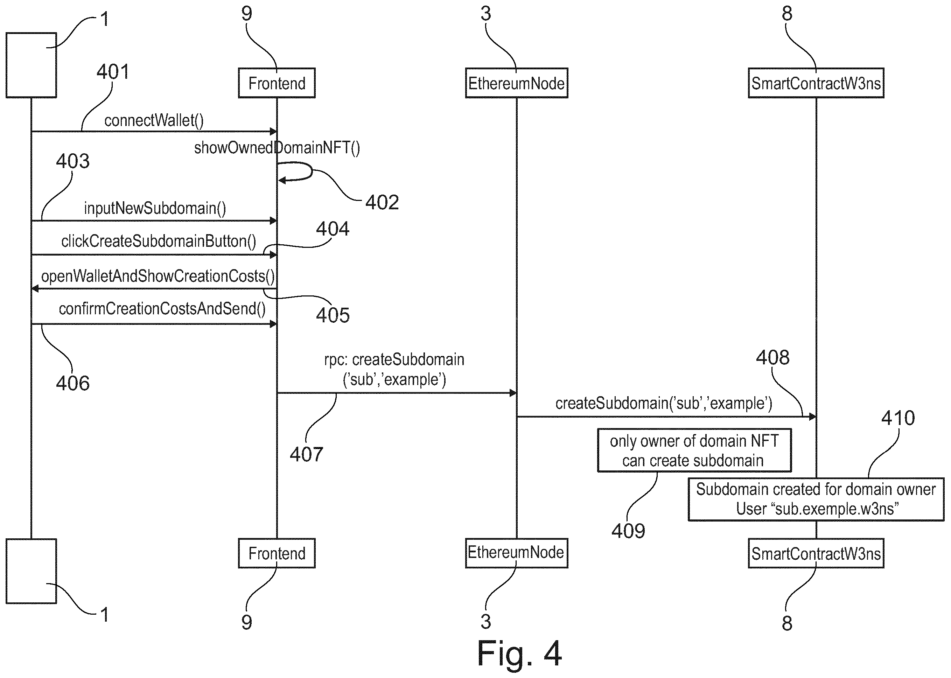

In figure 4, the sequence of events represents the process of creating a subdomain within the w3ns domain system of the blockchain. The figure involves several participants: the user with the computer 1, the frontend 9, the Network computer 3, and the first smart contract 8 (SmartContractW3NS).

The sequence begins at step 401 with the user using the computer 1 connecting their wallet program to the frontend 9 by executing the "connectWallet()" function. The frontend 9 then displays at step 402 the domain NFTs 11 owned by the wallet on a display of the computer 1.

The user provides at step 403 the desired subdomain name by inputting it into the frontend 9 and clicks at step 404 the "Create Subdomain" button on the display of the computer 1 to initiate the subdomain creation process. The frontend 9 validates the input and retrieves the creation costs, which are then presented to the user through the wallet at step 405. The user confirms the creation costs and proceeds to send the required funds by interacting
with the frontend at step 406. The frontend 9 facilitates this process by handling the user's confirmation and sending the transaction request via an RPC (Remote Procedure Call) at step 407 to the Network computer 3. The network computer 3 receives the subdomain creation request and forwards it at step 408 to the first smart contract 8 (SmartContractW3NS), which is the smart contract responsible for managing domain names within the w3ns system of the blockchain. The first smart contract 8 processes the request and verifies that the user (wallet) is the owner of the domain NFT associated with the main domain at step 409. The first smart contract 8 may compare the wallet adress that is delivered with the request with the wallet address of the domain NFT of the main domain.

If the wallet of the user is the owner of the main domain NFT, then the first mart contract 8 creates at step 410 the subdomain with the specified name, appending it to the main domain. For example, if the User requested the subdomain "sub" for the domain "example.w3ns," the resulting subdomain would be "sub.example.w3ns." This subdomain is registered in the main domain NFT.

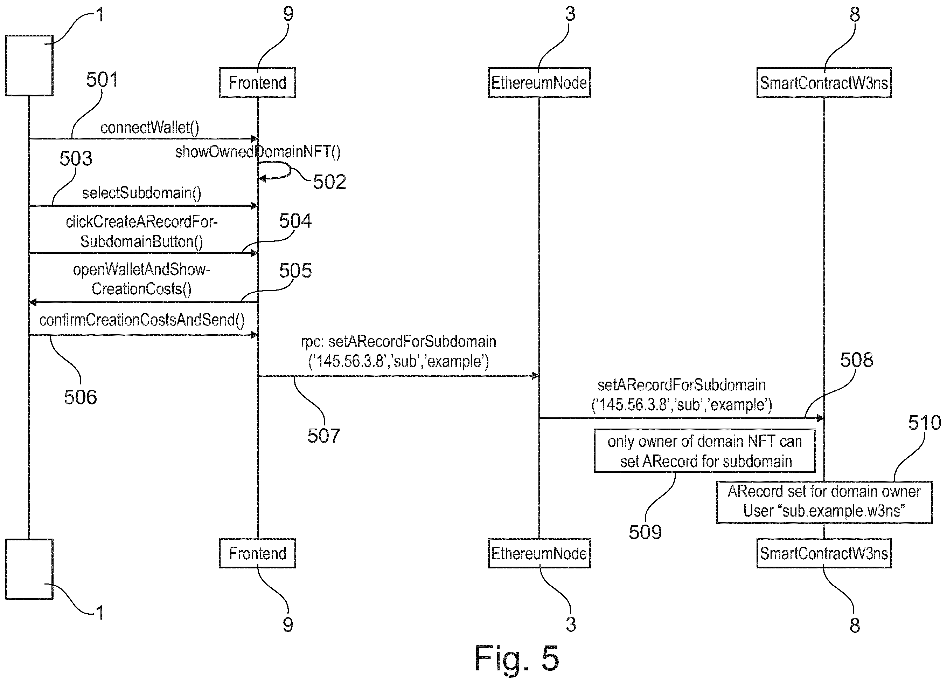

Figure 5 represents the process of setting an ARecord (IPv4 address) for a subdomain within the w3ns system. The actors involved in this sequence are the user with the computer 1, the frontend 9, the Network computer 3, and the first smart contract (SmartContractW3NS) 8.

The user begins at step 501 by connecting their wallet program that runs on the computer 1 to the frontend 9 using the "connectWallet()" function. The frontend 9 displays the NFTs owned by the wallet of the user on a display of the computer 1 at step 502.

The user selects and puts in the frontend 9 at step 503 the desired subdomain for which they want to set an ARecord. They then click at step 504 the "Create ARecord for Subdomain" button on the frontend 9 to initiate the ARecord creation process.

The frontend 9 presents the creation costs at step 505 to the user through their wallet on a displkay of the computer 1, and the user confirms the costs and proceeds with the transaction at step 506. This confirmation and transaction submission process is facilitated by the frontend 9.

The frontend 9 sends then at step 507 an RPC request to the network computer 3, specifically the "setARecordForSubdomain()" function, passing the IPv4 address (e.g., '145.56.3.8'), the subdomain name, and the main domain ('example') as parameters.

The network computer 3, upon receiving the request, forwards it at step 508 to the first smart contract 8. The First smart contract verifies at step 509 that the User is the owner of the domain NFT associated with the main domain. Only the owner of the domain NFT can set an ARecord for a subdomain.

If the User is the owner of the domain NFT, then the first smart contract 8 sets at step 510 the specified ARecord for the subdomain. This allows the subdomain to be associated with the provided IPv4 address.

The figure highlights the flow of actions from the User's connection to their wallet through the frontend, the request submission to the network computer, and the verification and ARecord setting performed by the first smart contract. It emphasizes that only the owner of the domain NFT can set an ARecord for a subdomain within the w3ns system.

### Figure 6

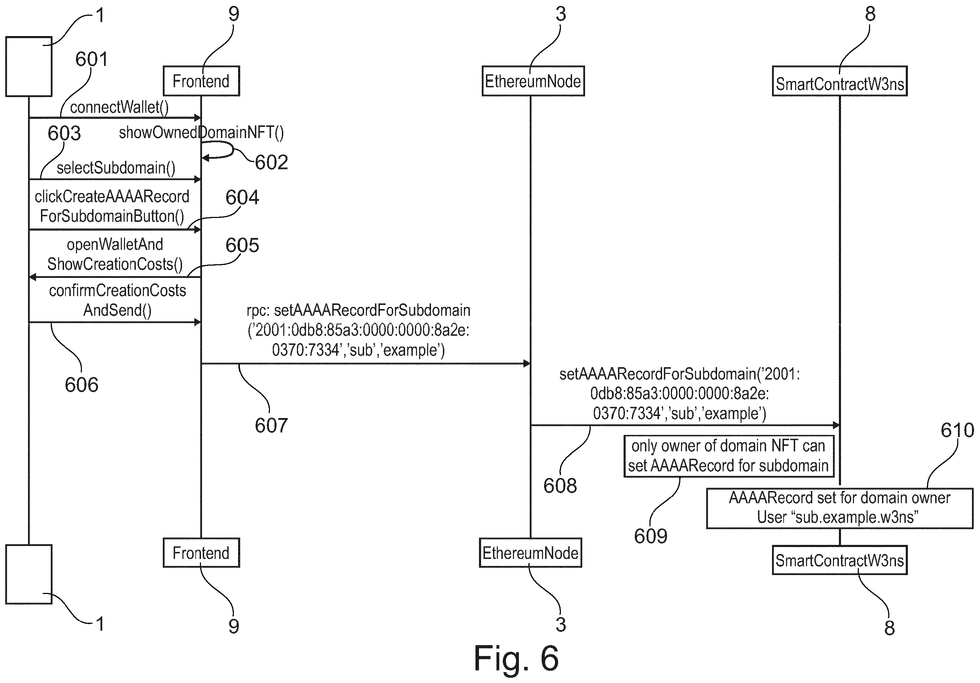

Figure 6 illustrates the process of setting an AAAARecord (IPv6 address) for a subdomain within the w3ns system. The actors involved in this sequence are the user using a computer, the frontend, the network computer, and the first smart contract.

The user starts at step 601 by connecting their wallet that runs on the computer 1 to the frontend using the "connectWallet()" function. The frontend 9 displays at step 602 the NFTs owned by the wallet of the user on a display of the computer 1.

The user then selects the desired subdomain for which they want to set an AAAARecord at step 603. They then click at step 604 the "Create AAAARecord for Subdomain" button on the frontend to initiate the AAAARecord creation process.

The frontend presents at step 605 the creation costs to the User through their wallet, and the user confirms with an input in the computer 1 the costs and proceeds with the transaction at step 606. This confirmation and transaction submission process is facilitated by the frontend.

The frontend sends at step 607 an RPC request to the network computer 3, specifically the "setAAAARecordForSubdomain()" function, passing the IPv6 address (e.g., '2001:0db8:85a3:0000:0000:8a2e:0370:7334'), the subdomain name, and the main domain ('example') as parameters.

The network computer 3 receives the request and forwards it at step 608 to the first smart contract 8. The first smart contract 8 verifies at step 609 that the wallet of the user is the owner of the domain NFT associated with the main domain. Only the owner of the domain NFT can set an AAAARecord for a subdomain.

If the user is the owner of the domain NFT, then at step 610 the first smart contract 8 sets the specified AAAARecord for the subdomain. This associates the subdomain with the provided IPv6 address.

The figure showcases the User's connection to their wallet through the frontend, the submission of the request to the network computer, and the verification and AAAARecord setting performed by the first smart contract. It emphasizes that only the owner of the domain NFT can set an AAAARecord for a subdomain within the w3ns system.

### Figure 7

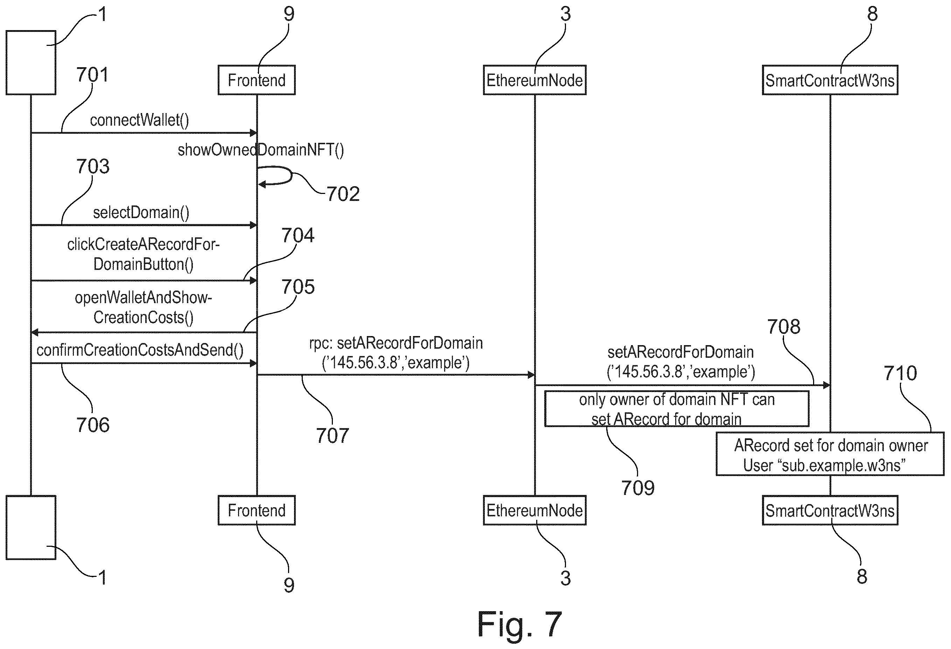

Figure 7 depicts the process of setting an ARecord (IPv4 address) for a domain within the w3ns system. The actors involved in this sequence are the user using a computer 1, the Frontend, the network computer 3, and the first smart contract 8.

The user initiates the process by connecting at step 701 their wallet that runs on the computer 1 to the frontend 9 using the "connectWallet()" function. The frontend 9 then displays the NFTs owned by the wallet of the user on a display of the computer 1.

The user selects the desired domain for which they want to set an ARecord at step 703 by inputting the desired domain in the computer 1. Then they click at step 704 the "Create ARecord for Domain" button on the frontend 9 to begin the ARecord creation process.

The frontend 9 presents at step 705 the creation costs to the user through their wallet. The user confirms the costs and proceeds with the transaction at step 706 by an input in the computer 1, indicating their intention to set an ARecord for the domain.

The frontend the sends at step 707 an RPC request to the network computer 3, specifically the "setARecordForDomain()" function, providing the IPv4 address (e.g., '145.56.3.8') and the domain name ('example') as parameters.

The network computer 3 receives the request and forwards it at step 708 to the first smart contract. The first smart contract verifies that the wallet of the user is the owner of the domain NFT associated with the domain at step 709. Only the owner of the domain NFT can set an ARecord for a domain.

If the User is the owner of the domain NFT, then the first smart contract 8 sets at step 710 the specified ARecord for the domain. This associates the domain with the provided IPv4 address.

The figure highlights the User's connection to their wallet through the Frontend, the submission of the request to the network computer 3, and the verification and ARecord setting performed by the first smart contract. It emphasizes that only the owner of the domain NFT can set an ARecord for a domain within the w3ns system.

### Figure 8

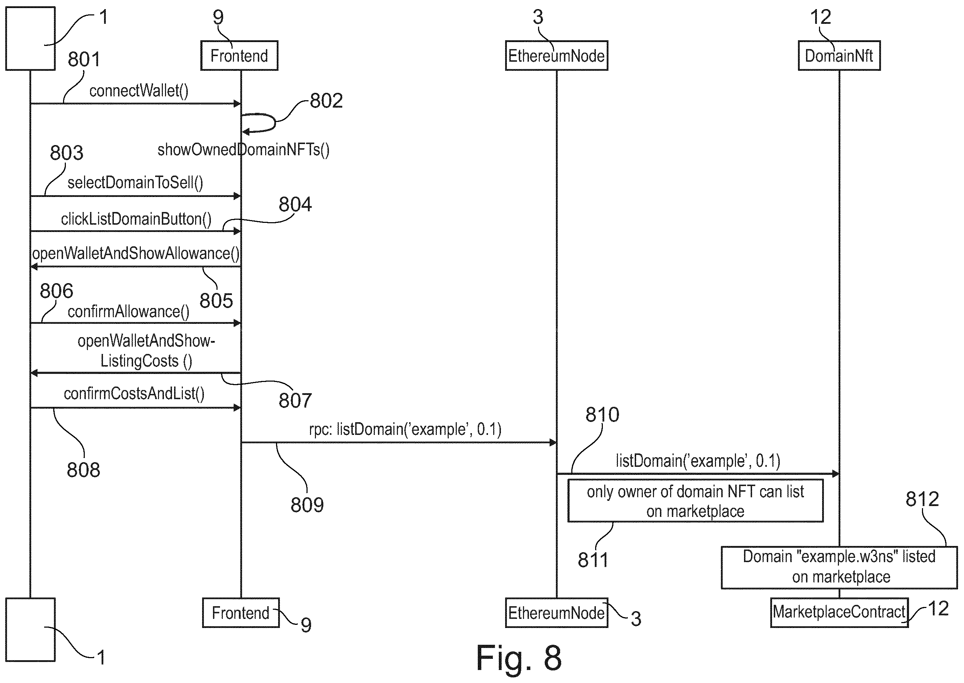

Figure 8 illustrates the process of listing a domain for sale on a marketplace within the w3ns system. The actors involved in this sequence are a seller, the frontend, the network computer 3, and a second smart contract, the MarketplaceContract.

The seller begins at step 801 by connecting their wallet that runs on the computer 1 to the frontend 9 using the "connectWallet()" function. The frontend 9 displays at step 802 the domain NFTs owned by the wallet of the seller on a display of the computer 1.

The seller selects at step 803 the domain they want to sell by an input in the computer 1 and clicks at step 804 the "List Domain" button on the frontend 9.

The frontend 9 prompts at step 805 the seller to allow the marketplace to transfer the domain NFT by showing the required allowance on the display of the computer 1. This step ensures that the marketplace can handle the transfer of the domain NFT on behalf of the seller. The seller confirms the allowance at step 806.

Next, the frontend presents at step 807 the listing costs to the seller through their wallet on a display of the computer 1. The seller confirms the costs at step 808 and proceeds to list the domain for sale.

The frontend sends then at step 809 an RPC request to the network computer 3, specifically the "listDomain()" function, providing the domain name ("example") and the desired price for example in ETH (0.1) as parameters.

The network computer 3 forwards at step 810 the request to the second smart contract 12 (MarketplaceContract), which verifies at step 811 that the wallet of the seller is the owner of the domain NFT associated with the domain. Only the owner of the domain NFT can list it on the marketplace.

If the wallet of the seller is the owner of the domain NFT, the second smart contract 12 lists the domain "example.w3ns" on the marketplace at step 812, indicating that it is available for sale.

The figure emphasizes the seller's connection to their wallet through the frontend, the steps to allow the marketplace to transfer the domain NFT, the confirmation of listing costs, and the execution of the listing transaction through the Network computer 3 and the second smart contract. It highlights that only the owner of the domain NFT can list it for sale on the marketplace within the w3ns system.

### Figure 9

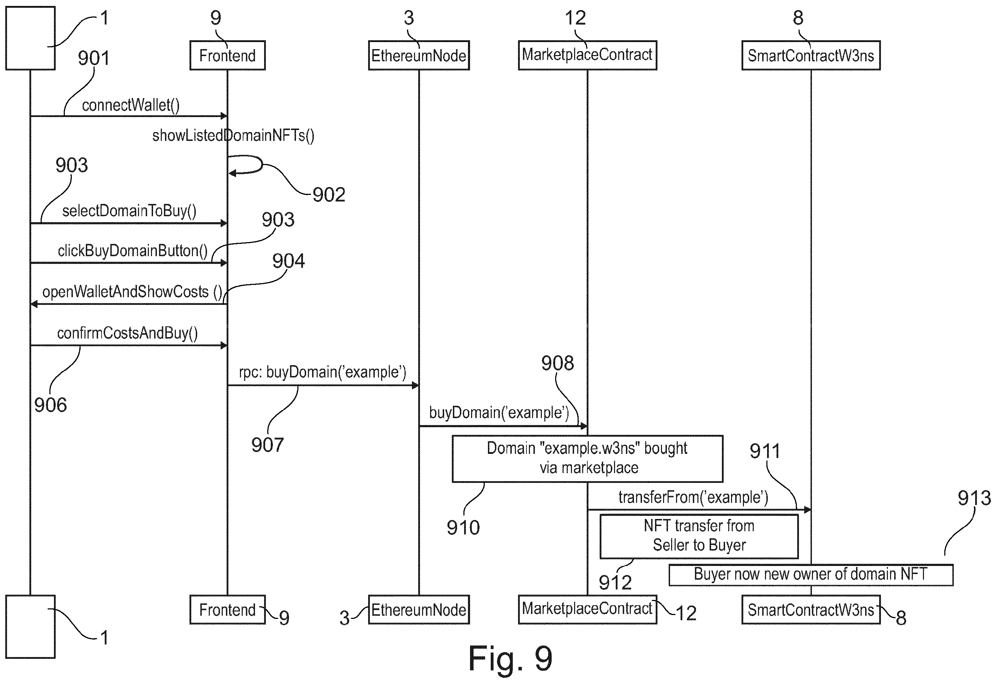

Figure 9 illustrates the process of a buyer purchasing a domain from a marketplace within the w3ns system. The actors involved in this sequence are the buyer, the frontend, the network computer 3, the second smart contract (MarketplaceContract), and the first smart contract.

The buyer begins by connecting their wallet that runs on the computer 1 to the frontend 9 at step 901 using the "connectWallet()" function. The frontend 9 displays at step 902 the NFTs listed on the second smart contract 12 (marketplace).

The buyer selects the domain they wish to purchase at step 903 by an input in the computer 1 and clicks the "Buy Domain" button on the frontend 9 at step 904.

The frontend presents the costs associated with the purchase to the buyer at step 905 through their wallet on a display of the computer 1. The buyer confirms the costs and proceeds with the purchase by an input in the computer 1 at step 906.

The frontend 9 sends at step 907 an RPC request to the Network computer 3, specifically the "buyDomain()" function, providing the domain name ("example") as a parameter.

The network computer 3 forwards at step 908 the request to the second smart contract 12 (MarketplaceContract), which handles the purchase transaction. The second smart contract 12 confirms that the domain "example.w3ns" is available for purchase.

Upon successful verification of the purchase of the domain at step 910, the second smart contract 12 initiates at step 911 a transfer of the domain NFT from the wallet of the seller to the wallet of the buyer using the "transferFrom()" function. This transfer is facilitated at step 912 by the first smart contract 8, which manages ownership and transfers of domain NFTs.

After the transfer, the buyer becomes at step 913 the new owner of the domain NFT associated with "example.w3ns". The figure emphasizes the buyer's connection to their wallet through the frontend 9, the confirmation of costs, and the execution of the purchase transaction through the network computer 3, the second smart contract, and first smart contract. It highlights that the domain NFT ownership is transferred from the seller to the buyer via the first smart contract, ensuring a secure and reliable domain purchase process within the w3ns system.

### Figure 10

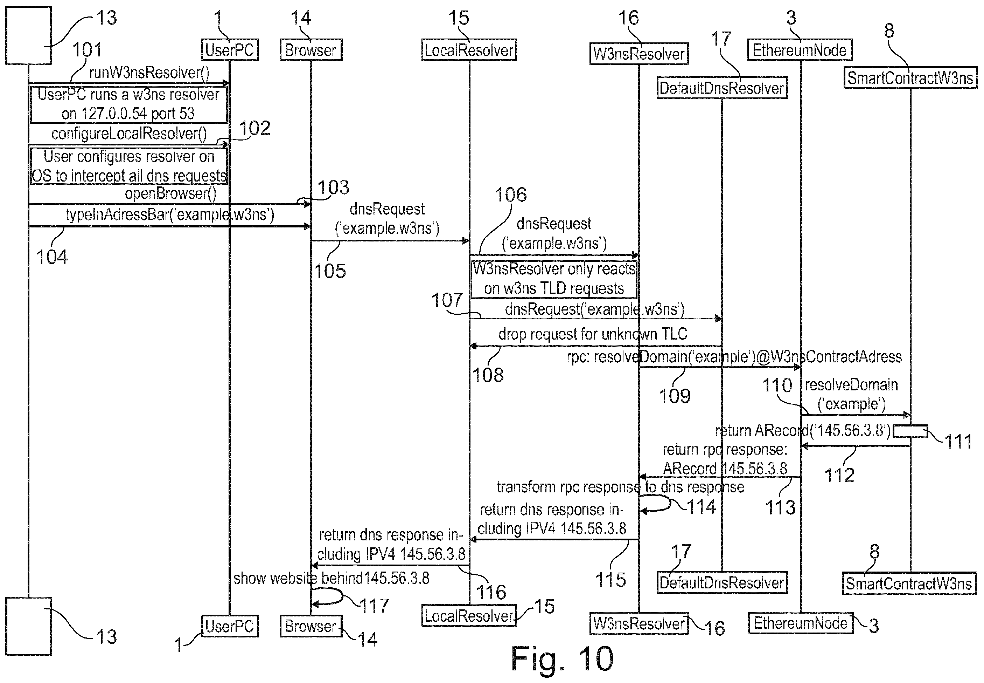

Figure 10 depicts the process of resolving a w3ns domain name (e.g., "example.w3ns") within a decentralized domain name system in a blockchain. The actors involved in this sequence are for example the user, computer 1, browser, local resolver, w3ns resolver, default DNS resolver, network computer 3, first smart contract.

The user 13 initiates the process by running the w3ns resolver 16 on their computer 1 at step 101, specifically on localhost IP address 127.0.0.54 and port 53. The user 13 then configures at step 102 their local resolver 15 on the operating system to intercept all domain name system (DNS) requests.

Next, the user opens the browser 14 at step 103 and types at step 104 in the address bar the w3ns domain name they wish to access, in this case, "example.w3ns".

The browser sends at step 105 a DNS request for "example.w3ns" to the local resolver 15.

The local resolver 15, being configured as the default resolver for the operating system, receives the DNS request. It first checks if the TLD (Top-Level Domain) is ".w3ns". If it is not, the local resolver 15 forwards at step 107 the request to the default DNS resolver 17. The default DNS resolver 17 drops at step 108 the request since the default DNS resolver does not know the searched domain name "example.w3ns".

However, since the TLD in this case is ".w3ns", the local resolver recognizes it as a w3ns domain and forwards the request to the w3ns resolver 16 at step 106.

The w3ns resolver 16, specialized in resolving w3ns domains, receives the DNS request for "example.w3ns". It then sends at step 109 an RPC (Remote Procedure Call) request to the network computer 3. The network computer 3 sends at step 110 a command to the first smart contract 8 to resolve the domain "example" using the resolveDomain() function.

The first smart contract 8 processes the request (resolveDomain() function) and retrieves the ARecord associated with "example.w3ns" from its storage at step 111. In this case, the ARecord is the IPV4 address "145.56.3.8".

The first smart contract returns at step 112 the ARecord to the network computer 3, which in turn sends the response back to the w3ns resolver at step 113.

The w3ns resolver transforms the RPC response into a DNS response at step 114 and includes the ARecord for "example.w3ns".

The w3ns resolver returns the DNS response at step 115, containing the ARecord "145.56.3.8", to the local resolver 15.

The local resolver 15, upon receiving the DNS response, forwards it back to the browser at step 116.

Finally, the browser receives the DNS response containing the IPV4 address "145.56.3.8" and proceeds to show the website associated with that address at step 117 on the display of the computer 1.

Overall, this figure shows the interaction between the user, the computer of the user, browser, local resolver, w3ns resolver, default Dns resolver, network computer 3, and first smart contract to resolve a w3ns domain name and retrieve the corresponding IPV4 address for accessing the website. The same process works with an IPV6 address or other address systems for example IPV6 addresses.

Depending on the used embodiment, the default DNS resolver 17 may be omitted if for example only domain names are used that are stored in the blockchain.

In a further embodiment, the computer 1 does not run a W3NS resolver but the W3NS resolver is run on an external computer.

The user 13 initiates the process by configuring on the computer their local resolver 15 on the operating system to intercept all domain name system (DNS) requests. The local resolver 15 uses in this case an external W3NS resolver that runs on an external computer for searching an IP address for a domain name. The computer 1 and the external computer may be connected via internet. Next, the user opens the browser 14 and types in the address bar the w3ns domain name they wish to access, in this case, "example.w3ns".

The browser sends at step 105 a DNS request for "example.w3ns" to the local resolver 15 or directly to the external W3NS resolver 16.

The local resolver 15, being configured as the default resolver for the operating system, receives the DNS request. It first checks if the TLD (Top-Level Domain) is ".w3ns". If it is not, the local resolver 15 forwards the request to the default DNS resolver 17. The default DNS resolver 17 drops the request since the default DNS resolver does not know the searched domain name "example.w3ns". However, since the TLD in this case is ".w3ns", the local resolver recognizes it as a w3ns domain and forwards the request to the external w3ns resolver 16.

The w3ns resolver 16, specialized in resolving w3ns domains, receives the DNS request for "example.w3ns". It then sends an RPC (Remote Procedure Call) request to the network computer 3. The network computer 3 sends a command to the first smart contract 8 to resolve the domain "example" using the resolveDomain() function.

The first smart contract 8 processes the request (resolveDomain() function) and retrieves the IP address associated with "example.w3ns" from its storage. In this case, the IP address is the IPV4 address "145.56.3.8".

The first smart contract returns the IP address for example ARecord to the network computer 3, which in turn sends the response back to the w3ns resolver.

The w3ns resolver transforms the RPC response into a DNS response and includes the IP address for "example.w3ns".

The w3ns resolver returns the DNS response, containing the IP address "145.56.3.8", to the local resolver 15 or to the browser directly.

The local resolver 15, upon receiving the DNS response, forwards it back to the browser.

Finally, the browser receives the DNS response containing the IP address (IPV4 address "145.56.3.8") and proceeds to show the website associated with that address on the display of the computer 1.

Some of the discussed methods refer to IPv4 or IPv6 addresses. However, the methods are not limited to these type of addresses. These IPv4 or IPv6 are only used as examples.

There are a multitude of decentralized dns protocols out there already. So far they usually only resolve the configured domain names against wallet addresses or IPFS (interplanetary file system) content. Some also provide a centralized resolver (which needs to be set in the browser's configuration). This seems to be a working solution, but under the hood it is very centralized, since all the requests are done via this one public resolver.

In the case of W3NS, the resolver actually resolves normal DNS entries (for example IPV4 or IPV6). For that to work, a user wanting to use the W3NS protocol may to configure and run an actual program on his machine. On the one hand, this means configuration effort, but on the other hand, it makes sure that there is no centralized entity that can restrict you from using the system, which makes it very censorship resistant.

Certain embodiments can be performed using a computer program or set of programs. The computer programs can exist in a variety of forms both active and inactive. For example, the computer programs can exist as software program(s) comprised of program instructions in source code, object code, executable code or other formats; firmware program(s), or hardware description language (HDL) files.

Any of the above can be embodied on a transitory or non-transitory computer readable medium, which include storage devices and signals, in compressed or uncompressed form. Exemplary computer readable storage devices include conventional computer system RAM (random access memory), ROM (read-only memory), EPROM (erasable, programmable ROM), EEPROM (electrically erasable, programmable ROM), and magnetic or optical disks or tapes.

While the invention has been described with reference to the exemplary embodiments thereof, those skilled in the art will be able to make various modifications to the described. The terms and descriptions used herein are set forth by way of illustration only and are not meant as limitations. In particular, although the method has been described by examples, the steps of the method can be performed in a different order than illustrated or simultaneously.

## Claims

1. A computer-implemented method for operating a domain name system by using a blockchain (3, 4, 5, 6), wherein the blockchain (3, 4, 5, 6) comprises a smart contract (8), wherein the smart contract (8) handles at least one domain name non-fungible-token DN NFT, wherein the DN NFT comprises a domain name and an IP address that is assigned to the domain name, wherein the smart contract (8) receives a request with a domain name to resolve an IP address for the domain name, wherein the smart contract (8) searches by using the domain name the DN NFT that comprises the domain name and the IP address, and wherein the smart contract (8) outputs the IP address that is assigned to the domain name in the DN NFT.

2. Method of claim 1, wherein a domain list that assigns domain names to DN NFTs is stored in the blockchain (3, 4, 5, 6), wherein each DN NFT comprises a domain name and the corresponding IP address, wherein the smart contract (8) is embodied to access the list, to search a searched domain name in the list, to access the DN NFT that is assigned to the searched domain name of the list, to output the IP address that is stored in the DN NFT as IP address of the searched domain name.

3. Method of any one of the preceding claims, wherein the smart contract (8) is embodied to receive a request to mint a DN NFT for a domain name and an IP address, wherein the smart contract (8) is embodied to mint a DN NFT in the blockchain that comprises the domain name and the IP address of the domain name, wherein the smart contract (8) lists the minted DN NFT in a domain list with the domain name and an address of the DN NFT.

4. Method of any one of the preceding claims, wherein the DN NFT comprises an address of a wallet, wherein the smart contract (8) is embodied to change data of the DN NFT upon a request from the wallet with the address that is stored in the DN NFT.

5. Method of any one of the preceding claims, wherein the smart contract (8) is embodied to provide upon a request at least one DN NFT that can be bought and transferred to another wallet, and wherein especially the smart contract (8) changes the address of the wallet in the DN NFT after a predetermined amount of token is transferred to a predetermined wallet and/or wherein the smart contract (8) is embodied to mint a DN NFT for a top level domain with a predetermined IP address and/or wherein the smart contract (8) is embodied to mint a DN NFT for a subdomain of a top level domain.

6. The method of any one of the preceding claims, wherein a smart contract (8) related to a domain name system is deployed on the blockchain (3, 4, 5, 6) by using a software tool, wherein the software tool runs on a computer (1), wherein at step 101 a deployer instructs the software tool by using the computer (1) to execute a runHardhatDeployScript()-function, wherein the runHardhatDeployScript()-function is responsible for deploying a domain name system related smart contract (8) on the blockchain (3, 4, 5, 6), wherein in a next step 102 the software tool interacts with a network computer (3, 4, 5, 6) through a remote procedure call RPC call, wherein the software tool sends a request to the network computer (3, 4, 5, 6) instructing it to deploy the first smart contract using a predetermined top-level domain TLD, the network computer (3, 4, 5, 6) processes at the next step 103 the request and deploys the first smart contract specified by the top-level domain, wherein the first smart contract is related to the domain name system and is specifically designed to handle functionalities and operations within the domain name system.

7. The method of any one of the preceding claims, wherein a process of minting a domain name NFT is performed on the blockchain (3, 4, 5, 6), wherein a user interacts by a computer (1) with a frontend software that runs on the computer (1), wherein the user connects at step 301 a wallet that runs on the computer to the frontend software by executing a connectWallet function, wherein then the frontend software displays at step 302 a form on a display of the computer (1) to the user allowing them to mint a domain name non-fungible token, wherein the user provides at step 303 the desired domain name by inputting it into the displayed form and then clicks a "Mint" button of the display of the computer (1) at step 304 to initiate the minting process in the blockchain (3, 4, 5, 6), wherein the frontend software validates the input and retrieves minting costs, which are then presented to the user through the wallet at step 305, wherein the user confirms at step 306 the minting costs and proceeds to send the required funds by interacting with the frontend software , wherein the frontend software facilitates this process by handling the user's confirmation and sending the transaction request via a remote procedure call RPC call to a network computer (3, 4, 5, 6) at step 307, wherein the network computer (3, 4, 5, 6) receives the minting request and forwards it at step 308 to a first smart contract SmartContractW3NS, which is the smart contract (8) responsible for managing domain names within the domain name system on the blockchain, wherein the first smart contract SmartContractW3NS processes the request and initiates the minting process for the specified domain name, wherein finally the first smart contract (8) interacts at step 309 with a domain NFT smart contract to create a domain name NFT non-fungible token representing the minted domain name, wherein the domain name NFT is created with the specified domain name and is associated with a blockchain address of the wallet of the user as the owner at step 310.

8. The method of any one of the preceding claims, wherein a process of setting an IP address for a domain name is performed, wherein a user initiates the process by connecting at step 701 their wallet that runs on a computer (1) to the frontend software that runs on the computer (1), wherein the frontend software then displays the domain name NFTs owned by the wallet of the user on a display of the computer (1), wherein the user selects the desired domain name for which they want to set an IP record at step 703 by inputting the desired domain name in the computer (1), wherein then they click at step 704 the "Create ARecord for Domain" button on the frontend software to begin the IP record creation process, wherein the frontend software presents at step 705 the creation costs to the user through their wallet, wherein the user confirms the costs and proceeds with the transaction at step 706 by an input in the computer (1) indicating their intention to set an IP record for the domain name, wherein the frontend software sends at step 707 a remote procedure call RPC request to the network computer, especially the "setARecordForDomain()" function, providing an IP address and the domain name as parameters, wherein the network computer (3, 4, 5, 6) receives the request and forwards it at step 708 to the first smart contract, wherein the first smart contract verifies that the wallet of the user is the owner of the domain name NFT associated with the domain at step 709, wherein only the owner of the domain name NFT can set an IP record for a domain, wherein if the user is the owner of the domain name NFT, then the first smart contract sets at step 710 the specified IP record for the domain, wherein this associates the domain with the provided IP address, wherein preferably the IP record is an address record, which is a type of DNS record that maps a domain name to its corresponding IP address.

9. The method of any one of the preceding claims, wherein a process of listing a domain name for sale on a marketplace is performed, wherein a seller begins at step 801 by connecting their wallet that runs on the computer to the frontend software using for example a connectWallet-function, wherein the frontend software displays at step 802 the domain name NFTs owned by the wallet of the seller on a display of the computer, wherein the seller selects at step 803 the domain they want to sell by an input in the computer and clicks at step 804 a "List Domain" button on the frontend software, wherein the frontend software prompts at step 805 the seller to allow the marketplace to transfer the domain name NFT by showing the required allowance on the display of the computer, wherein the seller confirms the allowance at step 806, wherein next the frontend software presents at step 807 the listing costs to the seller through their wallet on a display of the computer, wherein the seller confirms the costs at step 808 and proceeds to list the domain for sale, wherein the frontend software sends then at step 809 a remote procedure call RPC request to the network computer, especially the "listDomain()" function, providing the domain name and the desired price as parameters, wherein the network computer forwards at step 810 the request to the second smart contract MarketplaceContract, which verifies at step 811 that the wallet of the seller is the owner of the domain name NFT associated with the domain, wherein only the owner of the domain NFT can list it on the marketplace, wherein if the wallet of the seller is the owner of the domain NFT, the second smart contract lists the domain on the marketplace at step 812, indicating that it is available for sale.

10. The method of any one of the preceding claims, wherein a process of a buyer purchasing a domain name from a marketplace is performed, wherein a buyer begins by connecting their wallet that runs on the computer to the frontend software at step 901 using for example a connectWallet-function, wherein the frontend software displays at step 902 the domain name NFTs listed on a second smart contract, wherein the buyer selects the domain name NFT they wish to purchase at step 903 by an input in the computer and clicks a "Buy Domain" button on the frontend software at step 904, wherein the frontend software presents the costs associated with the purchase to the buyer at step 905 through their wallet on a display of the computer, wherein the buyer confirms the costs and proceeds with the purchase by an input in the computer at step 906, wherein the frontend software sends at step 907 a remote procedure call RPC request to the network computer, especially the "buyDomain()" function, providing the domain name as a parameter, wherein the network computer forwards at step 908 the request to the second smart contract, which handles the purchase transaction, wherein the second smart contract confirms that the domain is available for purchase, wherein upon a successful verification of the purchase of the domain at step 910, the second smart contract initiates at step 911 a transfer of the domain name NFT from the wallet of the seller to the wallet of the buyer using for example a "transferFrom" function, wherein the transfer may be facilitated at step 912 by the first smart contract, which manages ownership and transfers of domain name NFTs, wherein after the transfer, the buyer becomes at step 913 the new owner of the domain name NFT.

11. The computer-implemented method of any one of the preceding claims, wherein a request with a domain name is sent to a blockchain, wherein the request is to search a domain name non-fungible-token DN NFT that comprises the domain name and an IP address of the domain name in the blockchain and to put out the IP address of the DN NFT, wherein in particular the request with the domain name is sent to the blockchain via port 53 of an UDP protocol or TCP protocol.

12. The method of claim 11, wherein the request with the domain name is checked before sending the request to the blockchain, wherein the request is checked whether it comprises a domain name that is stored in the blockchain or outside the blockchain, wherein the request is sent to the blockchain if the request comprises a domain name that is stored in the blockchain, and wherein the request is sent to a domain name system outside the blockchain if the request comprises a domain name that is stored outside the blockchain.

13. A blockchain network (3, 4, 5, 6) for operating a domain name system, wherein the blockchain network (3, 4, 5, 6) comprises a smart contract (8), wherein the smart contract (8) handles at least one domain name non-fungible-token DN NFT, wherein the DN NFT comprises a domain name and an IP address that is assigned to the domain name, wherein a request with a domain name is received by the blockchain network (3, 4, 5, 6) to resolve for the domain name a corresponding IP address of the domain name, wherein the smart contract (8) of the blockchain network (3, 4, 5, 6) uses the domain name to search the DN NFT in the blockchain network (3, 4, 5, 6) that is assigned to the domain name, wherein the smart contract (8) reads out the IP address of the DN NFT, and wherein the blockchain network (3, 4, 5, 6) puts out as a response to the request at least the IP address that is assigned to the domain name in the DN NFT.

14. The blockchain network of claim 13, wherein a request to mint for a domain name and for an IP address a domain name non-fungible-token DN NFT is received by the blockchain network (3, 4, 5, 6), wherein a smart contract of the blockchain network (3, 4, 5, 6) mints the DN NFT that comprises the domain name and the IP address in the blockchain network (3, 4, 5, 6), wherein in particular the smart contract (8) lists the minted DN NFT in a domain list with the domain name and a blockchain address of the DN NFT.

15. A computer (3, 4, 5, 6) comprising means for carrying out a method according to any one of the claims 1 to 12.

16. A computer program comprising instructions which, when the program is executed by a computer (3, 4, 5, 6), cause the computer to perform the method of any one of the claims 1 to 12.

## Patentansprüche

1. Ein computerimplementiertes Verfahren zum Betreiben eines Domänennamensystems durch Verwenden einer Blockchain (3, 4, 5, 6), wobei die Blockchain (3, 4, 5, 6) einen Smart Contract (8) umfasst, wobei der Smart Contract (8) mindestens ein Domänennamen-Non-Fungible-Token, DN-NFT, handhabt, wobei das DN-NFT einen Domänennamen und eine IP-Adresse umfasst, die dem Domänennamen zugewiesen ist, wobei der Smart Contract (8) eine Anforderung mit einem Domänennamen empfängt, um eine IP-Adresse für den Domänennamen aufzulösen, wobei der Smart Contract (8) durch Verwenden des Domänennamen das DN-NFT sucht, das den Domänennamen und die IP-Adresse umfasst, und wobei der Smart Contract (8) die IP-Adresse ausgibt, die dem Domänennamen in dem DN-NFT zugewiesen ist.

2. Verfahren nach Anspruch 1, wobei eine Domänenliste, die Domänennamen zu DN-NFTs zuweist, in der Blockchain (3, 4, 5, 6) gespeichert ist, wobei jedes DN-NFT einen Domänennamen und die entsprechende IP-Adresse umfasst, wobei der Smart Contract (8) dazu ausgebildet ist, auf die Liste zuzugreifen, einen gesuchten Domänennamen in der Liste zu suchen, auf das DN-NFT zuzugreifen, das dem gesuchten Domänennamen der Liste zugewiesen ist, und die IP-Adresse, die in dem DN-NFT gespeichert ist, als IP-Adresse des gesuchten Domänennamen auszugeben.

3. Verfahren nach einem der vorhergehenden Ansprüche, wobei der Smart Contract (8) dazu ausgebildet ist, eine Anforderung zum Minten eines DN-NFT für einen Domänennamen und eine IP-Adresse zu empfangen, wobei der Smart Contract (8) dazu ausgebildet ist, ein DN-NFT in der Blockchain zu minten, das den Domänennamen und die IP-Adresse des Domänennamen umfasst, wobei der Smart Contract (8) das gemintete DN-NFT in einer Domänenliste mit dem Domänennamen und einer Adresse des DN-NFT auflistet.

4. Verfahren nach einem der vorhergehenden Ansprüche, wobei das DN-NFT eine Adresse einer Wallet umfasst, wobei der Smart Contract (8) dazu ausgebildet ist, Daten des DN-NFT auf eine Anforderung von der Wallet mit der Adresse, die in dem DN-NFT gespeichert ist, zu ändern.

5. Verfahren nach einem der vorhergehenden Ansprüche, wobei der Smart Contract (8) dazu ausgebildet ist, auf eine Anforderung mindestens ein DN-NFT bereitzustellen, das gekauft und an eine andere Wallet übertragen werden kann, und wobei insbesondere der Smart Contract (8) die Adresse der Wallet in dem DN-NFT ändert, nachdem eine vorbestimmte Menge an Token an eine vorbestimmte Wallet übertragen wurde, und/oder wobei der Smart Contract (8) dazu ausgebildet ist, ein DN-NFT für eine Domäne oberster Ebene mit einer vorbestimmten IP-Adresse zu minten, und/oder wobei der Smart Contract (8) dazu ausgebildet ist, ein DN-NFT für eine Unterdomäne einer Domäne oberster Ebene zu minten.

6. Das Verfahren nach einem der vorhergehenden Ansprüche, wobei ein Smart Contract (8) in Bezug auf ein Domänennamensystem auf der Blockchain (3, 4, 5, 6) durch Verwenden eines Softwaretools bereitgestellt wird, wobei das Softwaretool auf einem Computer (1) ausgeführt wird, wobei in Schritt 101 ein Deployer das Softwaretool durch Verwenden des Computers (1) anweist, eine runHardhatDeployScript()-Funktion auszuführen, wobei die runHardhatDeployScript()-Funktion für die Bereitstellung eines domänennamensystembezogenen Smart Contracts (8) auf der Blockchain (3, 4, 5, 6) verantwortlich ist, wobei in einem nächsten Schritt 102 das Softwaretool über einen Remote Procedure Call-Aufruf, RPC-Aufruf, mit einem Netzwerkcomputer (3, 4, 5, 6) interagiert, wobei das Softwaretool eine Anforderung an den Netzwerkcomputer (3, 4, 5, 6) sendet, die ihn anweist, den ersten Smart Contract unter Verwendung einer vorbestimmten Domäne oberster Ebene, TLD, bereitzustellen, wobei der Netzwerkcomputer (3, 4, 5, 6) in dem nächsten Schritt 103 die Anforderung verarbeitet und den ersten Smart Contract bereitstellt, der durch die Domäne oberster Ebene spezifiziert ist, wobei der erste Smart Contract mit dem Domänennamensystem in Beziehung steht und speziell dazu ausgelegt ist, Funktionalitäten und Operationen innerhalb des Domänennamensystems zu handhaben.

7. Das Verfahren nach einem der vorhergehenden Ansprüche, wobei ein Prozess des Mintens eines Domänennamen-NFT auf der Blockchain (3, 4, 5, 6) durchgeführt wird, wobei ein Benutzer durch einen Computer (1) mit einer Frontend-Software interagiert, die auf dem Computer (1) ausgeführt wird, wobei der Benutzer in Schritt 301 eine Wallet, die auf dem Computer ausgeführt wird, durch Ausführen einer ConnectWallet-Funktion mit der Frontend-Software verbindet, wobei die Frontend-Software dann in Schritt 302 ein Formular auf einer Anzeige des Computers (1) für den Benutzer anzeigt, das es ihm ermöglicht, ein Domänennamen-Non-Fungible-Token zu minten, wobei der Benutzer in Schritt 303 den gewünschten Domänennamen bereitstellt, indem er ihn in das angezeigte Formular eingibt und dann in Schritt 304 auf eine "Mint"-Schaltfläche der Anzeige des Computers (1) klickt, um den Minting-Prozess in der Blockchain (3, 4, 5, 6) zu initiieren, wobei die Frontend-Software die Eingabe validiert und Minting-Kosten abruft, die dann dem Benutzer in Schritt 305 über die Wallet präsentiert werden, wobei der Benutzer in Schritt 306 die Minting-Kosten bestätigt und fortfährt, die erforderlichen Gelder durch Interagieren mit der Frontend-Software zu senden, wobei die Frontend-Software diesen Prozess durch Handhaben der Bestätigung des Benutzers und Senden der Transaktionsanforderung über einen Remote Procedure Call-Aufruf, RPC-Aufruf, an einen Netzwerkcomputer (3, 4, 5, 6) in Schritt 307 ermöglicht, wobei der Netzwerkcomputer (3, 4, 5, 6) die Minting-Anforderung empfängt und sie in Schritt 308 an einen ersten Smart Contract SmartContractW3NS weiterleitet, der der Smart Contract (8) ist, der für das Verwalten von Domänennamen innerhalb des Domänennamensystems auf der Blockchain verantwortlich ist, wobei der erste Smart Contract SmartContractW3NS die Minting-Anforderung verarbeitet und den Minting-Prozess für den spezifizierten Domänennamen initiiert, wobei schließlich der erste Smart Contract (8) in Schritt 309 mit einem Domänen-NFT-Smart Contract interagiert, um ein Domänennamen-Non-Fungible-Token, Domänennamen-NFT, zu erzeugen, das den geminteten Domänennamen darstellt, wobei das Domänennamen-NFT mit dem spezifizierten Domänennamen erzeugt und mit einer Blockchain-Adresse der Wallet des Benutzers als Eigentümer in Schritt 310 assoziiert wird.

8. Das Verfahren nach einem der vorhergehenden Ansprüche, wobei ein Prozess zum Festlegen einer IP-Adresse für einen Domänennamen durchgeführt wird, wobei ein Benutzer den Prozess initiiert, indem er in Schritt 701 seine Wallet, die auf einem Computer (1) ausgeführt wird, mit der Frontend-Software verbindet, die auf dem Computer (1) ausgeführt wird, wobei die Frontend-Software dann die Domänennamen-NFTs, die der Wallet des Benutzers gehören, auf einer Anzeige des Computers (1) anzeigt, wobei der Benutzer in Schritt 703 den gewünschten Domänennamen auswählt, für den er einen IP-Datensatz festlegen möchte, indem er den gewünschten Domänennamen in den Computer (1) eingibt, wobei er dann in Schritt 704 auf die "Create ARecord for Domain"-Schaltfläche auf der Frontend-Software klickt, um mit dem IP-Datensatz-Erstellungsprozess zu beginnen, wobei die Frontend-Software in Schritt 705 dem Benutzer über seine Wallet die Erstellungskosten präsentiert, wobei der Benutzer die Kosten bestätigt und in Schritt 706 mit der Transaktion durch eine Eingabe in den Computer (1) fortfährt, die seine Absicht angibt, einen IP-Datensatz für den Domänennamen festzulegen, wobei die Frontend-Software in Schritt 707 an den Netzwerkcomputer, insbesondere die "setARecordForDomain()"-Funktion, eine Remote Procedure Call-Anforderung, RPC-Anforderung, sendet, die eine IP-Adresse und den Domänennamen als Parameter bereitstellt, wobei der Netzwerkcomputer (3, 4, 5, 6) die Anforderung empfängt und sie in Schritt 708 an den ersten Smart Contract weiterleitet, wobei der erste Smart Contract in Schritt 709 verifiziert, dass die Wallet des Benutzers der Eigentümer des Domänennamen-NFT ist, das mit der Domäne assoziiert ist, wobei nur der Eigentümer des Domänennamen-NFT einen IP-Datensatz für eine Domäne festlegen kann, wobei, falls der Benutzer der Eigentümer des Domänennamen-NFT ist, dann der erste Smart Contract in Schritt 710 den spezifizierten IP-Datensatz für die Domäne festlegt, wobei dieser die Domäne mit der bereitgestellten IP-Adresse assoziiert, wobei vorzugsweise der IP-Datensatz ein Adressdatensatz ist, der ein Typ von DNS-Datensatz ist, der einen Domänennamen seiner entsprechenden IP-Adresse zuordnet.

9. Das Verfahren nach einem der vorhergehenden Ansprüche, wobei ein Prozess zum Auflisten eines Domänennamens zum Verkauf auf einem Marktplatz durchgeführt wird, wobei ein Verkäufer beginnt, indem er in Schritt 801 seine Wallet, die auf dem Computer ausgeführt wird, beispielsweise unter Verwendung einer connectWallet-Funktion mit der Frontend-Software verbindet, wobei die Frontend-Software in Schritt 802 die Domänennamen-NFTs, die der Wallet des Verkäufers gehören, auf einer Anzeige des Computer anzeigt, wobei der Verkäufer in Schritt 803 die Domäne, die er verkaufen möchte, durch eine Eingabe in den Computer auswählt und in Schritt 804 auf eine "List Domain"-Schaltfläche auf der Frontend-Software klickt, wobei die Frontend-Software in Schritt 805 den Verkäufer auffordert, dem Marktplatz zu erlauben, das Domänennamen-NFT zu übertragen, indem er die erforderliche Erlaubnis auf der Anzeige des Computers zeigt, wobei der Verkäufer die Erlaubnis in Schritt 806 bestätigt, wobei als Nächstes die Frontend-Software in Schritt 807 dem Verkäufer über seine Wallet die Auflistungskosten auf einer Anzeige des Computers präsentiert, wobei der Verkäufer die Kosten in Schritt 808 bestätigt und fortfährt, die Domäne zum Verkauf aufzulisten, wobei die Frontend-Software dann in Schritt 809 an den Netzwerkcomputer, insbesondere die "listDomain()"-Funktion, eine Remote Procedure Call-Anforderung, RPC-Anforderung, sendet, die den Domänennamen und den gewünschten Preis als Parameter bereitstellt, wobei der Netzwerkcomputer in Schritt 810 die Anforderung an den zweiten Smart Contract MarketplaceContract weiterleitet, der in Schritt 811 verifiziert, dass die Wallet des Verkäufers der Eigentümer des Domänennamen-NFT ist, das mit der Domäne assoziiert ist, wobei nur der Eigentümer des Domänennamen-NFT es auf dem Marktplatz auflisten kann, wobei, falls die Wallet des Verkäufers der Eigentümer des Domänennamen-NFT ist, der zweite Smart Contract die Domäne in Schritt 812 auf dem Marktplatz auflistet und angibt, dass sie zum Verkauf verfügbar ist.

10. Das Verfahren nach einem der vorhergehenden Ansprüche, wobei ein Prozess durchgeführt wird, bei dem ein Käufer einen Domänennamen von einem Marktplatz kauft, wobei ein Käufer beginnt, indem er in Schritt 901 seine Wallet, die auf dem Computer ausgeführt wird, beispielsweise unter Verwendung einer connectWallet-Funktion mit der Frontend-Software verbindet, wobei die Frontend-Software in Schritt 902 die Domänennamen-NFTs anzeigt, die in einem zweiten Smart Contract aufgelistet sind, wobei der Käufer das Domänennamen-NFT auswählt, das er in Schritt 903 durch eine Eingabe in den Computer kaufen möchte, und in Schritt 904 auf eine "Buy Domain"-Schaltfläche auf der Frontend-Software klickt, wobei die Frontend-Software dem Käufer in Schritt 905 die mit dem Kauf assoziierten Kosten über seine Wallet auf einer Anzeige des Computers präsentiert, wobei der Käufer die Kosten bestätigt und mit dem Kauf durch eine Eingabe in den Computer in Schritt 906 fortfährt, wobei die Frontend-Software in Schritt 907 an den Netzwerkcomputer, insbesondere die "buyDomain()"-Funktion, eine Remote Procedure Call-Anforderung, RPC-Anforderung, sendet, die den Domänennamen als einen Parameter bereitstellt, wobei der Netzwerkcomputer in Schritt 908 die Anforderung an den zweiten Smart Contract weiterleitet, der die Kauftransaktion handhabt, wobei der zweite Smart Contract bestätigt, dass die Domäne zum Kauf verfügbar ist, wobei bei einer erfolgreichen Verifizierung des Kaufs der Domäne in Schritt 910 der zweite Smart Contract in Schritt 911 beispielsweise unter Verwendung einer "transferFrom"-Funktion eine Übertragung des Domänennamen-NFT von der Wallet des Verkäufers an die Wallet des Käufers initiiert, wobei die Übertragung in Schritt 912 durch den ersten Smart Contract ermöglicht werden kann, der das Eigentum an Domänennamen-NFTs verwaltet und diese überträgt, wobei nach der Übertragung der Käufer in Schritt 913 der neue Eigentümer des Domänennamen-NFT wird.

11. Das computerimplementiertes Verfahren nach einem der vorhergehenden Ansprüche, wobei eine Anforderung mit einem Domänennamen an eine Blockchain gesendet wird, wobei die Anforderung dazu dient, ein Domänennamen-Non-Fungible-Token, DN-NFT, zu suchen, das den Domänennamen und eine IP-Adresse des Domänennamen in der Blockchain umfasst, und die IP-Adresse des DN-NFT auszugeben, wobei insbesondere die Anforderung mit dem Domänennamen über Port 53 eines UDP-Protokolls oder TCP-Protokolls an die Blockchain gesendet wird.

12. Das Verfahren nach Anspruch 11, wobei die Anforderung mit dem Domänennamen vor dem Senden der Anforderung an die Blockchain überprüft wird, wobei die Anforderung überprüft wird, ob sie einen Domänennamen umfasst, der in der Blockchain oder außerhalb der Blockchain gespeichert ist, wobei die Anforderung an die Blockchain gesendet wird, falls die Anforderung einen Domänennamen umfasst, der in der Blockchain gespeichert ist, und wobei die Anforderung an ein Domänennamensystem außerhalb der Blockchain gesendet wird, falls die Anforderung einen Domänennamen umfasst, der außerhalb der Blockchain gespeichert ist.

13. Ein Blockchain-Netzwerk (3, 4, 5, 6) zum Betreiben eines Domänennamensystems, wobei das Blockchain-Netzwerk (3, 4, 5, 6) einen Smart Contract (8) umfasst, wobei der Smart Contract (8) mindestens ein Domänennamen-Non-Fungible-Token, DN-NFT, handhabt, wobei das DN-NFT einen Domänennamen und eine IP-Adresse umfasst, die dem Domänennamen zugewiesen ist, wobei eine Anforderung mit einem Domänennamen durch das Blockchain-Netzwerk (3, 4, 5, 6) empfangen wird, um für den Domänennamen eine entsprechende IP-Adresse des Domänennamens aufzulösen, wobei der Smart Contract (8) des Blockchain-Netzwerks (3, 4, 5, 6) den Domänennamen verwendet, um das DN-NFT in dem Blockchain-Netzwerk (3, 4, 5, 6) zu suchen, das dem Domänennamen zugewiesen ist, wobei der Smart Contract (8) die IP-Adresse des DN-NFT ausliest, und wobei das Blockchain-Netzwerk (3, 4, 5, 6) als Antwort auf die Anforderung mindestens die IP-Adresse ausgibt, die dem Domänennamen in dem DN-NFT zugewiesen ist.

14. Das Blockchain-Netzwerk nach Anspruch 13, wobei eine Anforderung zum Minten eines Domänennamen-Non-Fungible-Tokens, DN-NFT, für einen Domänennamen und für eine IP-Adresse durch das Blockchain-Netzwerk (3, 4, 5, 6) empfangen wird, wobei ein Smart Contract des Blockchain-Netzwerks (3, 4, 5, 6) das DN-NFT mintet, das den Domänennamen und die IP-Adresse in dem Blockchain-Netzwerk (3, 4, 5, 6) umfasst, wobei insbesondere der Smart Contract (8) das gemintete DN-NFT in einer Domänenliste mit dem Domänennamen und einer Blockchain-Adresse des DN-NFT auflistet.

15. Ein Computer (3, 4, 5, 6), umfassend Mittel zum Durchführen eines Verfahrens nach einem der Ansprüche 1 bis 12.

16. Ein Computerprogramm, umfassend Anweisungen, die, wenn das Programm von einem Computer (3, 4, 5, 6) ausgeführt wird, den Computer veranlassen, das Verfahren nach einem der Ansprüche 1 bis 12 durchzuführen.

## Revendications

1. Procédé mis en œuvre par ordinateur pour faire fonctionner un système de noms de domaine en utilisant une blockchain (3, 4, 5, 6), la blockchain (3, 4, 5, 6) comprenant un contrat intelligent (8), le contrat intelligent (8) traitant au moins un jeton non fongible de nom de domaine, DN NFT, le DN NFT comprenant un nom de domaine et une adresse IP qui est attribuée au nom de domaine, où le contrat intelligent (8) reçoit une demande avec un nom de domaine pour résoudre une adresse IP pour le nom de domaine, où le contrat intelligent (8) recherche, à l'aide du nom de domaine, le DN NFT qui comprend le nom de domaine et l'adresse IP, et où le contrat intelligent (8) délivre en sortie l'adresse IP qui est attribuée au nom de domaine dans le DN NFT.

2. Procédé selon la revendication 1, dans lequel une liste de domaines qui attribue des noms de domaines à des DN NFT est stockée dans la blockchain (3, 4, 5, 6), dans lequel chaque DN NFT comprend un nom de domaine et l'adresse IP correspondante, dans lequel le contrat intelligent (8) est conçu pour accéder à la liste, pour rechercher un nom de domaine recherché dans la liste, pour accéder au DN NFT qui est attribué au nom de domaine recherché de la liste, pour délivrer en sortie l'adresse IP stockée dans le DN NFT en tant qu'adresse IP du nom de domaine recherché.

3. Procédé selon l'une quelconque des revendications précédentes, dans lequel le contrat intelligent (8) est conçu pour recevoir une demande visant à frapper un jeton DN NFT pour un nom de domaine et une adresse IP, où le contrat intelligent (8) est configuré pour frapper un DN NFT dans la blockchain qui comprend le nom de domaine et l'adresse IP du nom de domaine, où le contrat intelligent (8) répertorie le DN NFT frappé dans une liste de domaines avec le nom de domaine et une adresse du DN NFT.

4. Procédé selon l'une quelconque des revendications précédentes, dans lequel le DN NFT comprend une adresse d'un portefeuille, où le contrat intelligent (8) est configuré pour changer des données du DN NFT sur demande du portefeuille avec l'adresse qui est stockée dans le DN NFT.

5. Procédé selon l'une quelconque des revendications précédentes, dans lequel le contrat intelligent (8) est configuré pour fournir sur demande au moins un DN NFT pouvant être acheté et transféré à un autre portefeuille, où le contrat intelligent (8) modifie en particulier l'adresse du portefeuille dans le DN NFT après transfert d'une quantité prédéterminée de jetons vers un portefeuille prédéterminé et/ou où le contrat intelligent (8) est configuré pour frapper un DN NFT pour un domaine de premier niveau avec une adresse IP prédéterminée et/ou où le contrat intelligent (8) est configuré pour frapper un DN NFT pour un sous-domaine d'un domaine de premier niveau.

6. Procédé selon l'une quelconque des revendications précédentes, dans lequel un contrat intelligent (8) lié à un système de noms de domaine est déployé sur la blockchain (3, 4, 5, 6) au moyen d'un outil logiciel, où l'outil logiciel fonctionne sur un ordinateur (1), où, à l'étape 101, un déployeur donne pour instruction à l'outil logiciel, en utilisant l'ordinateur (1), d'exécuter une fonction runHardhatDeployScript(), où la fonction runHardhatDeployScript() est responsable du déploiement d'un système de noms de domaine intelligent (8) sur la blockchain (3, 4, 5, 6), où, dans une étape suivante 102, l'outil logiciel interagit avec un ordinateur réseau (3, 4, 5, 6) par l'intermédiaire d'un appel de procédure à distance, RPC, l'outil logiciel envoyant une demande à l'ordinateur réseau (3, 4, 5, 6) lui donnant pour instruction de déployer le premier contrat intelligent en utilisant un domaine de premier niveau, TLD, prédéterminé, où l'ordinateur réseau (3, 4, 5, 6) traite, à l'étape suivante 103, la demande et déploie le premier contrat intelligent spécifié par le domaine de premier niveau, le premier contrat intelligent étant lié au système de noms de domaine et étant spécifiquement conçu pour gérer les fonctionnalités et les opérations au sein du système de noms de domaine.

7. Procédé selon l'une quelconque des revendications précédentes, dans lequel un processus de frappe d'un nom de domaine NFT est exécuté sur la blockchain (3, 4, 5, 6), où un utilisateur interagit par un ordinateur (1) avec un logiciel frontal qui s'exécute sur l'ordinateur (1), où l'utilisateur connecte, à l'étape 301, un portefeuille qui s'exécute sur l'ordinateur au logiciel frontal en exécutant une fonction ConnectWallet, où le logiciel frontal affiche ensuite, à l'étape 302, un formulaire sur un écran de l'ordinateur (1) à l'attention de l'utilisateur lui permettant de frapper un jeton non fongible de nom de domaine, l'utilisateur fournissant, à l'étape 303, le nom de domaine souhaité en le saisissant dans le formulaire affiché, puis cliquant sur un bouton de frappe « Mint » de l'écran de l'ordinateur (1) à l'étape 304 pour initier le processus de frappe dans la blockchain (3, 4, 5, 6), où le logiciel frontal valide l'entrée et récupère les coûts de frappe, qui sont ensuite présentés à l'utilisateur par l'intermédiaire du portefeuille à l'étape 305, l'utilisateur confirmant à l'étape 306 les coûts de frappe et envoyant les fonds requis en interagissant avec le logiciel frontal, le logiciel frontal facilitant ce processus en gérant la confirmation de l'utilisateur et en envoyant la demande de transaction par l'intermédiaire d'un appel de procédure à distance, RPC, à un ordinateur réseau (3, 4, 5, 6) à l'étape 307, où l'ordinateur réseau (3, 4, 5, 6) reçoit la demande de frappe et la transmet, à l'étape 308, à un premier contrat intelligent SmartContractW3NS, qui est le contrat intelligent (8) chargé de la gestion des noms de domaine au sein du système de noms de domaine sur la blockchain, le premier contrat intelligent SmartContractW3NS traitant la demande et initiant le processus de frappe pour le nom de domaine spécifié, où, enfin, le premier contrat intelligent (8) interagit à l'étape 309 avec un contrat intelligent de NFT de domaine pour créer un jeton non fongible, NFT, de nom de domaine représentant le nom de domaine frappé, où le NFT de nom de domaine est créé avec le nom de domaine spécifié et est associé à une adresse blockchain du portefeuille de l'utilisateur en tant que propriétaire à l'étape 310.

8. Procédé selon l'une quelconque des revendications précédentes, dans lequel un processus de définition d'une adresse IP pour un nom de domaine est exécuté, dans lequel un utilisateur initie le processus en connectant, à l'étape 701, son portefeuille qui s'exécute sur un ordinateur (1) au logiciel frontal qui s'exécute sur l'ordinateur (1), dans lequel le logiciel frontal affiche ensuite les NFT de noms de domaine appartenant au portefeuille de l'utilisateur sur un affichage de l'ordinateur (1), où l'utilisateur sélectionne le nom de domaine souhaité pour lequel il souhaite définir un enregistrement IP à l'étape 703 en saisissant le nom de domaine souhaité dans l'ordinateur (1), où il clique ensuite, à l'étape 704, sur le bouton de création d'un enregistrement pour le domaine « Create A Record for Domain » sur le logiciel frontal pour commencer le processus de création d'enregistrement IP, le logiciel frontal présentant à l'étape 705 les coûts de création pour l'utilisateur par l'intermédiaire de son portefeuille, où l'utilisateur confirme les coûts et procède à la transaction à l'étape 706 par une entrée dans l'ordinateur (1) indiquant son intention de définir un enregistrement IP pour le nom de domaine, le logiciel frontal envoyant, à l'étape 707, une demande d'appel de procédure à distance, RPC, à l'ordinateur réseau, en particulier la fonction « setARecordForDomain() », fournissant une adresse IP et le nom de domaine comme paramètres, où l'ordinateur réseau (3, 4, 5, 6) reçoit la requête et la transmet, à l'étape 708, au premier contrat intelligent, où le premier contrat intelligent vérifie que le portefeuille de l'utilisateur est le propriétaire du NFT du nom de domaine associé au domaine à l'étape 709, où seul le propriétaire du NFT du nom de domaine peut définir un enregistrement IP pour un domaine, où, si l'utilisateur est le propriétaire du NFT du nom de domaine, alors le premier contrat intelligent définit à l'étape 710 l'enregistrement IP spécifié pour le domaine, ce qui associe le domaine à l'adresse IP fournie, l'enregistrement IP étant de préférence un enregistrement d'adresse, qui est un type d'enregistrement DNS qui fait correspondre un nom de domaine à son adresse IP correspondante.

9. Procédé selon l'une quelconque des revendications précédentes, dans lequel un processus de listage d'un nom de domaine en vente sur une place de marché est réalisé, où un vendeur commence à l'étape 801 en connectant son portefeuille qui s'exécute sur l'ordinateur au logiciel frontal en utilisant par exemple une fonction ConnectWallet, où le logiciel frontal affiche à l'étape 802 les NFT de noms de domaine détenus par le portefeuille du vendeur sur un affichage de l'ordinateur, où le vendeur sélectionne, à l'étape 803, le domaine qu'il souhaite vendre au moyen d'une entrée dans l'ordinateur et clique à l'étape 804 sur un bouton « List Domain » sur le logiciel frontal, le logiciel frontal invitant, à l'étape 805, le vendeur à permettre au marché de transférer le NFT du nom de domaine en montrant l'allocation requise sur l'écran de l'ordinateur, le vendeur confirmant l'allocation à l'étape 806, où, ensuite, le logiciel frontal présente à l'étape 807 les coûts d'inscription au vendeur par l'intermédiaire de son portefeuille sur un affichage de l'ordinateur, le vendeur confirmant les coûts à l'étape 808 et procédant au listage du domaine à vendre, le logiciel frontal envoyant alors à l'étape 809 une demande d'appel de procédure à distance, RPC, à l'ordinateur réseau, notamment la fonction « listDomain() », fournissant comme paramètres le nom de domaine et le prix souhaité, où l'ordinateur réseau transmet à l'étape 810 la demande au deuxième contrat intelligent « MarketplaceContract », ce qui vérifie à l'étape 811 que le portefeuille du vendeur est le propriétaire du NFT du nom de domaine associé au domaine, où seul le propriétaire du NFT du domaine peut le lister sur la place de marché, où, si le portefeuille du vendeur est le propriétaire du NFT du domaine, le deuxième contrat intelligent liste le domaine sur la place de marché à l'étape 812, indiquant qu'il est disponible à la vente.

10. Procédé selon l'une quelconque des revendications précédentes, dans lequel un processus d'achat par un acheteur d'un nom de domaine sur une place de marché est réalisé, un acheteur commençant par connecter son portefeuille qui s'exécute sur l'ordinateur au logiciel frontal à l'étape 901 en utilisant par exemple une fonction connectWallet, le logiciel frontal affichant à l'étape 902 les NFT des noms de domaine répertoriés sur un deuxième contrat intelligent, où l'acheteur sélectionne le NFT du nom de domaine qu'il souhaite acheter à l'étape 903 au moyen d'une entrée dans l'ordinateur et clique sur le bouton d'achat d'un domaine « Buy Domain » sur le logiciel frontal à l'étape 904, le logiciel frontal présentant les coûts associés à l'achat à l'acheteur à l'étape 905 par l'intermédiaire de son portefeuille sur un écran de l'ordinateur, l'acheteur confirmant les coûts et procédant à l'achat au moyen d'une entrée dans l'ordinateur à l'étape 906, où le logiciel frontal envoie à l'étape 907 une requête d'appel de procédure à distance, RPC, à l'ordinateur réseau, notamment la fonction « buyDomain() », fournissant le nom de domaine comme paramètre, où l'ordinateur réseau transmet à l'étape 908 la requête au deuxième contrat intelligent, lequel gère la transaction d'achat, le deuxième contrat intelligent confirmant que le domaine est disponible à l'achat, où, lors d'une vérification réussie de l'achat du domaine à l'étape 910, le deuxième contrat intelligent initie à l'étape 911 un transfert du NFT du nom de domaine depuis le portefeuille du vendeur vers le portefeuille de l'acheteur à l'aide par exemple d'une fonction « transferFrom », le transfert pouvant être facilité, à l'étape 912, par le premier contrat intelligent, qui gère la propriété et les transferts des NFT de noms de domaine, où, après le transfert, l'acheteur devient à l'étape 913 le nouveau propriétaire du NFT du nom de domaine.

11. Procédé mis en œuvre par ordinateur selon l'une quelconque des revendications précédentes, dans lequel une requête avec un nom de domaine est envoyée à une blockchain, dans lequel la requête consiste à rechercher un jeton non fongible de nom de domaine, DN NFT, qui comprend le nom de domaine et une adresse IP du nom de domaine dans la blockchain et à délivrer en sortie l'adresse IP du jeton DN NFT, où, en particulier, la requête avec le nom de domaine est envoyée à la blockchain par le port 53 d'un protocole UDP ou d'un protocole TCP.

12. Procédé selon la revendication 11, dans lequel la requête avec le nom de domaine est vérifiée avant d'envoyer la requête à la blockchain, la requête étant vérifiée afin de voir si elle comprend un nom de domaine qui est stocké dans la blockchain ou en dehors de la blockchain, la requête étant envoyée à la blockchain si la requête comprend un nom de domaine qui est stocké dans la blockchain, et où la requête est envoyée à un système de noms de domaine en dehors de la blockchain si la requête comprend un nom de domaine stocké en dehors de la blockchain.

13. Réseau blockchain (3, 4, 5, 6) permettant de faire fonctionner un système de noms de domaine, le réseau blockchain (3, 4, 5, 6) comprenant un contrat intelligent (8), le contrat intelligent (8) traitant au moins un jeton non fongible de nom de domaine, DN NFT, le DN NFT comprenant un nom de domaine et une adresse IP attribuée au nom de domaine, une demande avec un nom de domaine étant reçue par le réseau blockchain (3, 4, 5, 6) pour résoudre, pour le nom de domaine, une adresse IP correspondante du nom de domaine, le contrat intelligent (8) du réseau blockchain (3, 4, 5, 6) utilisant le nom de domaine pour rechercher le DN NFT dans le réseau blockchain (3, 4, 5, 6) qui est attribué au nom de domaine, le contrat intelligent (8) lisant l'adresse IP du DN NFT, et où le réseau blockchain (3, 4, 5, 6) émet en réponse à la requête au moins l'adresse IP attribuée au nom de domaine dans le DN NFT.

14. Réseau blockchain selon la revendication 13, dans lequel une demande de frappe, pour un nom de domaine et une adresse IP, d' jeton non fongible de nom de domaine, DN NFT, est reçue par le réseau blockchain (3, 4, 5, 6), où un contrat intelligent du réseau blockchain (3, 4, 5, 6) frappe le DN NFT qui comprend le nom de domaine et l'adresse IP dans le réseau blockchain (3, 4, 5, 6), où, en particulier, le contrat intelligent (8) répertorie le DN NFT frappé dans une liste de domaines avec le nom de domaine et une adresse de blockchain du DN NFT.

15. Ordinateur (3, 4, 5, 6) comprenant des moyens pour mettre en œuvre un procédé selon l'une quelconque des revendications 1 à 12.

16. Programme informatique comprenant des instructions qui, lorsque le programme est exécuté par un ordinateur (3, 4, 5, 6), amènent l'ordinateur à exécuter le procédé selon l'une quelconque des revendications 1 à 12.
